# EUROPEAN PATENT SPECIFICATION

(11) **EP 1 238 920 B1**
(45) Date of publication and mention of the grant of the patent: **08.12.2004**
(21) Application number: 02077036.8
(22) Date of filing: 18.12.1998
(51) Int. Cl.: B65D 75/26, B65D 75/30, B29C 65/02, B31B 39/00

(54) **Container having perimeter seals and made of multilayer materials**
Behälter mit Peripherieabdichtungen und aus mehrschichtigen Materialien
Recipient à joints péripheriques et en matériaux à couches multiples

(30) Priority: 24.12.1997 US 998256; 30.01.1998 US 16236
(43) Date of publication of application: 11.09.2002
(62) Divisional of application: 98964099.0
(73) Proprietor: BAXTER INTERNATIONAL INC., Deerfield, IL 60015 (US)
(72) Inventor: Smith, Sidney T., Lake Forest, Illinois 60045 (US); Giovanetto, Steven H., Vernon Hills, Illinois 60061 (US); Buchanan, Bradley, Ross, California 94957 (US); Rosenbaum, Larry, Gurnee, Illinois 60031 (US)
(74) Representative: Dee, Ian Mark

(56) References cited:
- EP-A- 0 675 053
- CH-A- 649 058
- DE-A- 2 434 248
- US-A- 3 768 724
- US-A- 4 497 857
- US-A- 4 927 647

## Description

### Technical Field

The present invention relates to seal geometries for containers and, more specifically, seams used to seal a container and compartments of a container which may be constructed from multilayer film materials.

### Background of the Invention

Containers used for the shipping, storing, and delivery of liquids, such as medical or therapeutic fluids, are often fabricated from single-ply or multi-ply polymer based materials. The materials used to construct the container must be folded or two sheets must otherwise be placed in overlapping relationship and the overlapping sheets bonded at their outer periphery to define a chamber or pouch for containing liquids. Typically, the materials are joined along their inner surfaces using bonding techniques such as heat sealing, radio-frequency sealing, thermal transfer welding, adhesive sealing, solvent bonding, sonic sealing, and laser welding.

For most applications, the seal formed must be of sufficient strength to withstand the stresses generated by dropping, or agitating the liquid filled container. Problems have been encountered in forming sufficiently strong seals in multilayered materials where the components that constitute the material are, in some way, incompatible with one another. One problem that has been encountered is in forming strong seals in multilayered materials that have a large discrepancy in the moduli of elasticity of the material component parts.

For example, a cell culture container described in co-pending and commonly assigned United States Patent Application No. 08/330,717, is constructed of a multilayered material having an outer layer of a polymer blend of styrene-ethylene-butene-styrene ("SEBS") block copolymer (40%-85% by weight), ethylene vinyl acetate (0-40% by weight), and polypropylene (10%-40% by weight) and an inner layer of a polystyrene. Because of the difference in the moduli of elasticity of the components of the multilayered material, it was not possible to form strong seals by bonding the polystyrene layers to one another. Consequently, the resulting cell culture container was not capable of being centrifuged at useful speeds, and could not in many instances be dropped at heights above six feet without the seals failing.

U.S. Patent No. 3,403,064 ("the '064 patent") discloses a method of forming a composite plastic container with an inner and outer seal. The walls of the container are laminates each including an inner layer of a polyhalohydrocarbon film and an outer layer of a polyvinyl resin. A pair of the laminates are placed in confronting relation between a pair of dies. This results in a layered structure of four layers between the dies at the commencement of the sealing process. By squeezing the dies and applying inductive sealing energy, such as ultrasonic or radio frequency energy, two seals are formed. An outer seal is formed between the outer layers (polyvinyl resin). The inner layers (polyhalohydrocarbon films) melt and are pushed inward, out of the area of the dies, to form an inner seal 16. The sealing process thus creates two seal areas having different numbers of layers. The outer seal area comprises two layers (two polyvinyl resin layers), and the inner seal area comprises four layers (two polyvinyl resin layers and two polyhalohydrocarbon film layers). The difference in layers is created by forcing the inner layers out of the first seal area during the sealing process. To accomplish this, however, the materials of the inner and outer layers of the '064 patent must have varying responsiveness to exposure to ultrasonic or radio frequencies to allow for relative movement of the layers. This prevents the use of conduction sealing energies.

Other difficulties have been encountered in sealing access ports in the container. In the medical field, as well as in other fields, it is customary to include access ports so that the contents of the container may be accessed from outside the container. The access ports typically have a cylindrical shaped tube of small diameter that extends from outside the container to inside the container to provide a fluid passageway into and out of the container. Sealing of an access port to the side walls of the container using conductive heat sealing techniques however, has led, in an unacceptable number of cases, to what is termed as channel leak. Channel leak is thought to result from an incomplete seal along the outer periphery of the port tube with the sidewalls of the container thereby resulting in a channel that allows fluid to flow from the container along the outer periphery of the port tube.

For some medical applications, such as reconstituting drugs, it is desirable to construct a container with multiple compartments, with each compartment divided along a frangible seal which will rupture when subjected to a certain fluid pressure. For example, medical containers may include more than one compartment, separately containing substances which may be mixed once the frangible seam which divides the compartments is broken. One such type of multiple-compartment container is disclosed in U.S. Patent No. 5,176,634 ("the '634 patent"). The container of the '634 patent is seamed around the periphery of the two sidewall inner surfaces, and includes a similar seam at an intermediate portion of the container to define two inner compartments. The intermediate seam is frangible ("peelable"). The '634 patent discloses making the periphery seam stronger by using a sealing technique with higher temperature, pressure and time than used to create the peelable seam. However, such a method of making a periphery seam which is sufficiently stronger than an internal frangible seam, while providing a leak proof frangible seam, is difficult and inexact. Slight variations in the sealing parameters in the '634 sealing technique could result in a weak peripheral seam or leakage in the frangible seam. Further, the '634 sealing technique would be ineffective in sealing multilayered materials if the inner layers of the materials were not capable of forming a strong peripheral seal.

Because of the problems discussed above relative to forming a strong peripheral seam in certain multilayered materials there is a need for a creating a suitably strong peripheral seam in such materials. Also, there is a need for an economical and leakproof way of providing an access port or tube which passes from within to outside the container through the container periphery seam. Further, because of the problems discussed above relative to the use of a frangible seam within the container and a container peripheral seam, there is a need for creating a suitable frangible internal seam while providing a peripheral seam which is of much greater strength.

Some medical containers can contain a relatively large quantity of fluids (1-2 liters), i.e., large volume containers. As the fluid volume increases in the container, so does the hydraulic forces of the fluid. In instances where the containers are filled prior to transporting them to the end user, hydraulic forces can cause the seals to fail. Similarly, when a medical container of this type is dropped, tearing along the sealed portion can develop when the hydraulic forces exceed the tear initiation force limit of the seal. The tear can propagate along the seam, upon the application of forces well below the tear initiation force, until the container bursts. Thus, a container may not burst upon dropping, but may do so upon handling afterward.

A method designed to improve seal strength is disclosed in United States Patent No. 4,968,624 issued to Bacehowski et al. and assigned to Baxter International Inc. ("Bacehowski"). Bacehowski discloses a medical container having two peripheral seals in horizontal spaced relationship. Sidewalls of the container are fabricated from a multi-ply material with uniform ply thickness across the sidewalls. This structure increases the burst strength of the container. However, Bacehowski does not provide a method for bonding materials that have varying ply thicknesses across the film.

Document DE-A-24 34 248 discloses a container having an outer layer which is not appropriate to provide a peripheral seam. The peripheral seam is formed by an inner layer.

Due to the problems relative to sealing containers manufactured from multilayered materials, there is a need for creating a suitably strong peripheral seam in such containers.

### Summary Of The Invention

According to the present invention there is provided a container according to claim 1 and a method of fabricating a container according to claim 21.

In accordance with the present invention, containers and methods of sealing containers are provided which solve the problems set forth above.

It is an object of the present invention to provide a container having a first and second sidewall, the first and second sidewall each having an inner and outer surface. A skirt connects outer surfaces of the first and second sidewall to define an inner chamber therebetween.

In a second container of the present invention, a first sidewall is of a material having a first layer and a second layer, the second layer overlapping a portion of the first layer to define an overlap area. A sealing flange extends from the first layer outward of the overlap area. The container also includes a second sidewall connected to the first sidewall along the sealing flange to define an inner chamber between the first and second sidewall.

A third container of the present invention comprises a first sidewall and second sidewall each having outer surfaces. The first sidewall is connected to a portion of the second sidewall along a seam to define a chamber having an opening at one end. A tail seam is provided for sealing the chamber opening. The tail seam has a skirt connecting the outer surface of the first sidewall to the outer surface of the second sidewall.

A fourth container of the present invention comprises a first and second sidewall connected together along a peripheral seam to define an inner chamber therebetween. A strip material located along at least a portion of the first sidewall and extending parallel to container ends is of a material different than that of the first and second sidewalls. The strip material frangibly attaches the first sidewall to the second sidewall to define separate compartments in the inner chamber.

A fifth container of the present invention comprises a first and second sidewall each having inner and outer sides. The second sidewall is connected to a portion of the first sidewall to define a pouch having an inner chamber therebetween and an open end. A skirt connects the outer side of the first side wall to the outer side of the second sidewall to close the pouch end. An access port extends through the skirt from outward the chamber to inward of the inner chamber to define a fluid pathway.

Another container of the present invention comprises a first sidewall having a first layer and a second layer. The second layer overlaps a portion of the first layer to define an overlap area. A sealing flange extends from the first layer outward of the overlap area. A second sidewall is connected to the first sidewall along the sealing flange to define an inner chamber therebetween. The second sidewall and the sealing flange define a first layered structure having a first number of layers along the sealing flange. The overlap area and the second sidewall define a second layered structure having a second number of layers. The second number of layers is greater than the first number of layers. The container is sealed by positioning peripheral edges of the first and second sidewalls into registration so that the overlap area is substantially centrally disposed over the second sidewall and applying sealing energy to the first number of layers to define a peripheral seam.

In addition, the present invention relates to containers and a method for sealing multilayered materials whose inner layers are incapable of forming sufficiently strong seals using current sealing techniques. This method for sealing multilayered containers can be used to form containers, seal access ports into the containers, and to provide a multi-chambered container having a strong peripheral seam.

In one embodiment of the present invention, a container suitable for medical uses comprises a first planar member, a second planar member, a first seam, and a second seam. The first planar member is produced from a first multilayered polymeric material. This multilayered polymeric material comprises a first substrate and a first layer. The first layer is disposed on a portion of the first substrate to separately define a first overlap area and a first peripheral flange. The first peripheral flange extends from the first overlap area.

The first seam includes the union of a portion of the first overlap area to the second planar member. The second seam is spaced from the first seam and includes the union of a portion of the first peripheral flange to the second planar member.

In another embodiment, the second planar member comprises a second multi-layered polymeric material and preferably of the same material as the first planar member. Accordingly, the second multilayered polymeric material comprises a second substrate and a second layer. The second layer is disposed on a portion of the second substrate. This joining of the second substrate and the second layer separately defines a second overlap area and a second peripheral flange. The second peripheral flange extends from the second overlap area.

In this embodiment, the first seam includes the union of a portion of the first overlap area to a portion of the second overlap area. The second seam is separate from the first seam and includes the union of a portion of the first peripheral flange to a portion of the second peripheral flange.

In yet another embodiment, the container comprises a first planar member of a first multilayered polymeric material, a second planar member of a second multilayered polymeric material, a first seam, a spacer seam, and a second seam. Here, the first seam comprises a linking section and a bonding section. The linking section attaches an outer portion of the first overlap area with an outer portion of the second overlap area. Accordingly, the linking section has a four-ply thickness. In another embodiment, the first and second layers each comprise two layers wherein each overlap area comprises three layers. Thus, in this embodiment, the linking section has a six-ply thickness. The bonding section attaches an inner portion of the first peripheral flange with an inner portion of the second peripheral flange. This joining of the inner portions of the first and second peripheral flanges produces a two-ply thickness.

The spacer seam separates the first seam from the second seam. The spacer seam defines a chamber formed between an intermediate portion of the first peripheral flange and an intermediate portion of the second peripheral flange.

The second seam is preferably located proximate to the outer perimeter of the sealed portion of the container. Similar to the bonding section of the first seam, the second seam includes the union of portions of the first and second planar members. In particular, the second seam includes the union of an outer portion of the first peripheral flange to an outer portion of the second peripheral flange. Like the bonding section of the first seam, the second seam comprises a two-ply thickness.

According to another aspect of the invention, a method is provided for sealing planar members together such as multi-layered polymeric films to form a medical container. A first planar member is provided having a first layer on a first substrate wherein peripheral edges of the first layer are located inwardly of peripheral edges of the first substrate. The peripheral edges of the first substrate define a first peripheral flange. A second planar member is also provided having a second layer on a second substrate wherein peripheral edges of the second layer are located inwardly of peripheral edges of the second substrate. The peripheral edges of the second substrate define a second peripheral flange. The planar members are positioned in opposed relation wherein the first layer confronts the second layer to define and first interface area and the first peripheral flange confronts the second peripheral flange to define a second interface area. A welding apparatus is provided having a die. The first and second interface areas are placed in the welding apparatus, and the die is activated to compress the planar members in the interface areas. Sealing energy is applied through the die forming a welded seam in the first interface area and a welded seam in the second interface area.

According to a further aspect of the invention, the first interface area includes the area where the first welded seam is formed and further includes the linking section and the bonding section of the first welded seam. The second interface area includes the area where the second welded seam is formed and further includes the outer portions of the peripheral flanges.

According to yet a further aspect of the invention, the welding die comprises a first pair of welding dies and a second pair of welding dies. The first interface area is positioned between the first welding dies and the second interface area is positioned between the second welding dies. The welding dies are activated to compress the first interface area to a first compression ratio and to compress the second interface area to a second compression ratio wherein the first compression ratio is substantially equal to the second compression ratio.

Other advantages and aspects of the present invention will become apparent upon reading the following description of the drawings and detailed description of the invention.

### Brief Description Of The Drawings

Figures 1 to 3 are included for illustrative purposes only and do not fall within the scope of the present invention.
FIG. 1 is a perspective view of a medical fluid container of the present invention;
FIG. 2 is a cross-sectional view along line 2-2 of the container shown in FIG. 1;
FIG. 3 is a cross-sectional view along line 3-3 of the container shown in FIG. 1;
FIG. 4 is a cross-sectional view of a container having side walls of a multilayered material;
FIG. 5 is a cross-sectional view of a multilayered material used to construct a sidewall;
FIG. 6 is a perspective view of a multichambered container having subchambers divided along a frangible seam;
FIG. 7 is a cross-sectional view taken along line 7-7 of Figure 6;
FIG. 8 is a break away view of a container having an access port;
FIG. 9 is a perspective view of a container constructed from a multilayered material with the first and second sidewalls connected along interior surfaces along a sealing flange;
FIG. 10 is a plan view of a blank used to fabricate the container shown in FIG. 9;
FIG. 11 is a perspective view of a container constructed of a multilayered material with the first and second side walls connected along a sealing flange on interim surfaces of the first and second sidewalls and including a tail seam closing a portion of the container;
FIG. 12 is a perspective view of a multichambered container having multiple access ports for accessing the subchambers independently from one another.
FIG. 13 is a partial elevational view of a pair of multilayered sidewalls between a pair of open dies;
FIG. 14 is a partial elevational view of the multilayered sidewalls shown in FIG. 13 but with the dies closed;
FIG. 15 is partial elevational view of a pair of sidewalls between a pair of closed dies wherein only one of the sidewalls is multilayered;
FIG. 16 is a partial elevational view of a pair of multilayered sidewalls between another pair of closed dies;
FIG. 17 is a partial elevational view of a multilayered sidewall having a uniform thickness; and,
FIG. 18 is a partial elevational view of a pair of multilayered sidewalls shown in FIG. 17 between a pair of closed dies.
FIG. 19 is a perspective view of another medical fluid container of the present invention;
FIG. 20 is a plan view of a multilayered planar member used to construct a container wall;
FIG. 20a is a side elevational view of the multilayered planar member of FIG. 20;
FIG. 21 is a plan view of another multilayered planar member used to construct another container wall;
FIG. 21a is a side elevational view of the multilayered planar member of FIG. 21;
FIG. 22 is an enlarged partial cross-sectional view of an outer peripheral edge of the container of FIG. 19 sealed in accordance with one aspect of the invention;
FIG. 23 is an enlarged partial cross-sectional view of an outer peripheral edge of the container of FIG. 19 sealed in accordance with another aspect of the invention;
FIG. 23a is an enlarged partial cross-sectional view of an outer peripheral edge of the container of FIG. 19 sealed in accordance with another aspect of the invention;
FIG. 24 is an enlarged partial cross-sectional view of an outer peripheral edge of the container of FIG. 19 sealed in accordance with another aspect of the invention;
FIG. 25 is an enlarged partial cross-sectional view of an outer peripheral edge of the container of FIG. 19 sealed in accordance with another aspect of the invention;
FIG. 26 is an enlarged partial cross-sectional view showing outer peripheral edges of the planar members between pairs of welding dies, where the dies are open;
FIG. 27 is an enlarged partial cross-sectional view of the outer peripheral edges between the dies where the dies are partially closed but not compressing the planar members;
FIG. 28 is an enlarged partial cross-sectional view of the outer peripheral edges between the dies where the dies are closed; and,
FIG. 29 is an enlarged partial cross-sectional view of the outer peripheral edges of the planar members sealed in accordance with the present invention.

### Detailed Description of the Preferred Embodiments

While this invention is susceptible of embodiment in many different forms, there is shown in the drawings and will herein be described in detail preferred embodiments of the invention with the understanding that the present disclosure is to be considered as an exemplification of the principles of the invention and is not intended to limit the broad aspect of the invention to the embodiments illustrated.

The present invention relates to containers and a method for sealing multilayered materials whose inner layers are incapable of forming strong seals using current sealing techniques. The method of sealing containers of the present invention may be used to form containers, to provide access ports in containers without channel leak, and to provide a multi-chambered container having a strong peripheral seam with a frangible seam separating the individual compartments. The containers fabricated using the sealing method may be used for a wide variety of applications including the medical and food product industries. The preferred embodiment of the present invention, as depicted in the drawings, relates to the use of the present invention in containers for medical fluids, such as IV bags (for intravenous administration of medical solutions) or other fluid administration bags, and cell-culture bags.

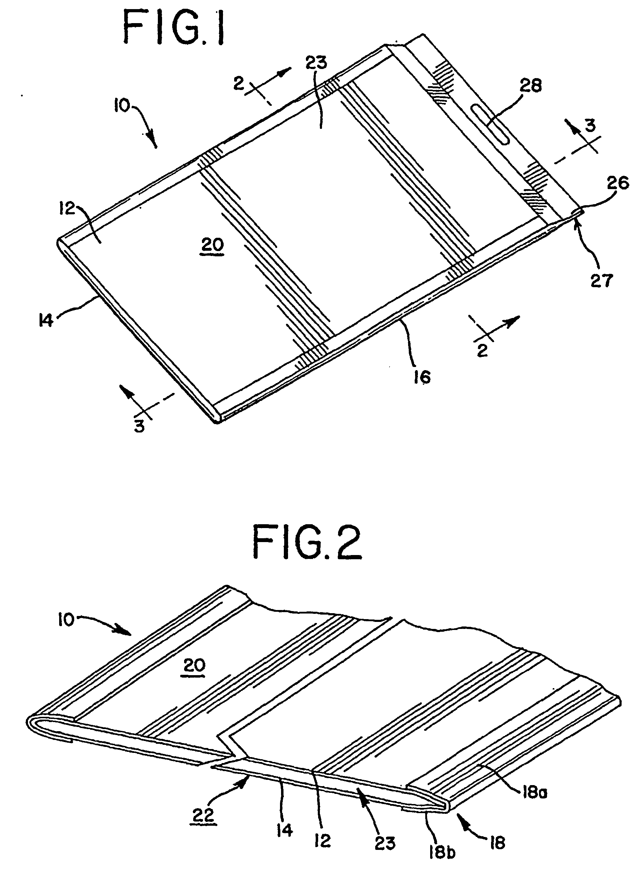

As shown in Figures 1, 2, and 3, a container 10 has a first sidewall 12 attached to a second sidewall 14 along a peripheral seam 16. The peripheral seam 16 consist of a skirt 18 having a pair of connected legs 18a and 18b. The skirt 18 may be formed of a strip of material that is folded at an intermediate portion of the material wherein leg 18a attaches to a first sidewall outer surface 20 and leg 18b attaches to a second sidewall outer surface 22. A chamber 23 is defined between the first and second sidewalls 12 and 14 for the storage of fluids or other material.

The skirt 18 and the respective outer surfaces 20 and 22 of the first and second sidewalls 12 and 14 should be constructed of materials that allow for a strong bond to form using conductive, inductive, or other common sealing techniques. These materials are preferably selected from the group consisting of polyolefins including but not limited to polypropylene, polyethylene including low density polyethylene, polybutene and copolymers of the same; polyamides such as nylons, polyvinyl chloride, polyurethane, and polymer blends such as those disclosed in the commonly assigned U.S. Patent No. 4,140,162, which is incorporated herein by reference. Such polymer blends include a blend of styrene-ethylene-butene-styrene ("SEBS") block copolymer (40%-85% by weight), ethylene vinyl acetate (0-40% by weight), and polypropylene (10%-40% by weight).

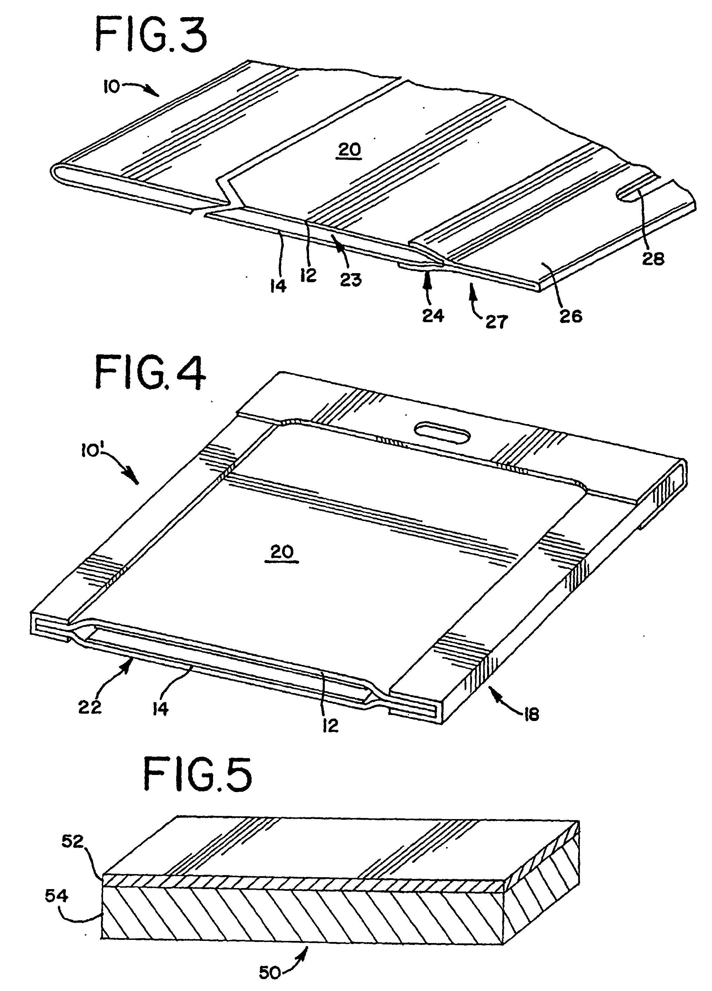

As shown in Figure 3, at one end 24 of the container the skirt 18 includes a flange 26 to seal end 24 of the container. This skirt 18 may sometimes be referred to as a tail seal 27. The tail seal 27 may be used to close an open pouch that has been previously sealed by the present sealing technique or by other methods. The flange 26 has a portion removed at an intermediate portion of the flange 26 to define a hanger hole 28 dimensioned to receive a bag hanger apparatus for suspending the container 10.

Figure 4 shows container 10' having sidewall 14 constructed from a multilayered material 50 (Figure 5). The multilayered material has at least inner 52 and outer 54 layers, but of course could include additional layers without departing from the invention. Because skirt 18 attaches the outer surfaces 20 and 22 respectively of the first and second sidewalls 12 and 14, it does not matter whether inner layer 52 is capable of forming a strong bond with sidewall 12. The outer layer 52 is preferably of a material selected from the same group set forth above for the side walls. The inner layer 54 may be selected from the group of polystyrene, and ethylene vinyl alcohol or other material that provides a desired functionality to the container 10'.

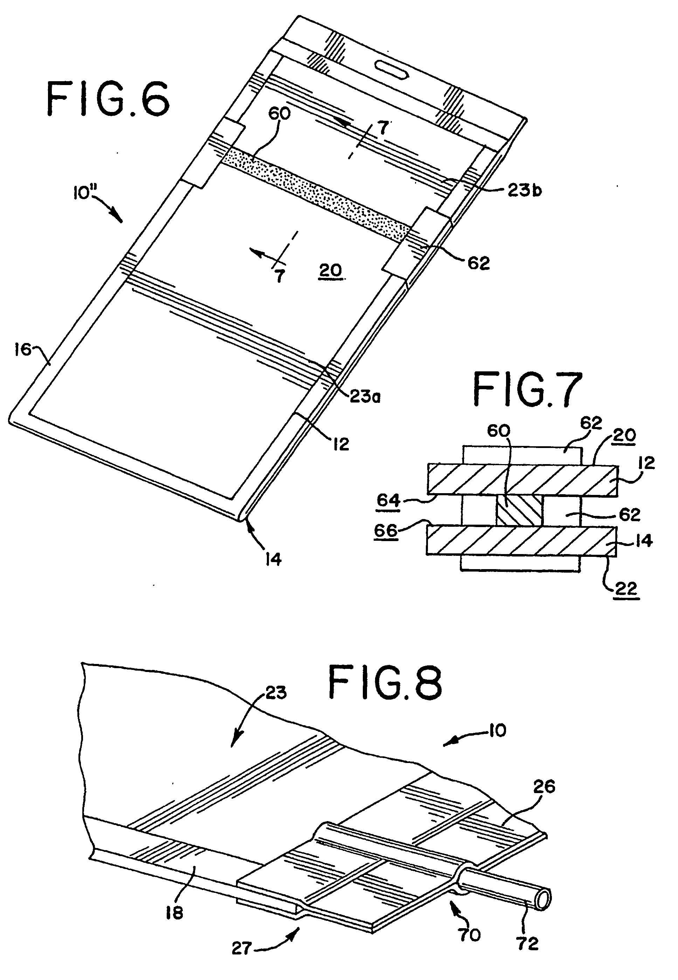

Figures 6 and 7 show such a container 10" having a frangible seam 60 which extends laterally across the container 10" and connects the first sidewall 12 to the second sidewall 14 along the frangible seam 60. The frangible seam 60 thereby divides the inner chamber 23 into subchambers 23a and 23b. It would also be possible to provide a longitudinal frangible seam without departing from the invention. The first and second side walls 12 and 14 may be sealed together as shown in Figure 1 with a skirt 18 forming a peripheral seam 16 around the entire periphery of the container 10" or by sealing the inner surfaces 64 and 66 of the respective first and second sidewalls 12 and 14 together along the periphery of the container 10". A strong peripheral seam 16 may be formed along the inner surfaces 64 and 66 of the first and second sidewalls 12 and 14 if the inner surfaces of the first and second sidewalls 12 and 14 are of a material specified above which are capable of forming a strong seal.

The frangible seam 60 is preferably selected from a material that has a higher modulus of elasticity and therefore more stiff than the material used to construct the first and second sidewalls 12 and 14. An example of such a material to form the frangible seam 60 would be polystyrene when used with the polymer blend of SEBS, EVA, and polypropylene. Ethylene vinyl alcohol would be another example when used with ethylene vinyl acetate.

If the frangible seam 60 extends laterally to the outer periphery of the container forming a weak seal at the outer periphery, then it is necessary to include a short skirt 62 to attach the outer surface 20 of the first side wall 12 to the outer surface 22 of the second side wall to shore up this weak seam area. The short skirt 62 may be fabricated from the same category of materials as the sidewalls and the skirt 18 set forth above.

The container 10" has particular uses in the medical field for providing a multi-chamber container so that the subcompartments may contain chemicals or solutions which may be mixed together in the container 10" immediately before use. For example, a multi-chamber medical fluid administration bag 10" may contain different substances in the different compartments, and the frangible seam 60 may be broken by medical personnel by applying pressure to the frangible seam 60 (such as by squeezing one 23a or both 23a and 23b of the compartments). Once the substances are properly mixed, the mixed solution may be administered to the patient. Another example of a use for a multi-chambered container having such a frangible seam 60 is in containers used as hot or cold packs. Such containers utilize chemicals which, when mixed, undergo an exothermic, or an endothermic, chemical reaction. The container 10" according to the present invention provides a container with compartments 23a and 23b separated by a frangible seam 60 which may be broken when the hot pack or cold pack is needed, without the concern for inadvertently rupturing the peripheral seam of the container.

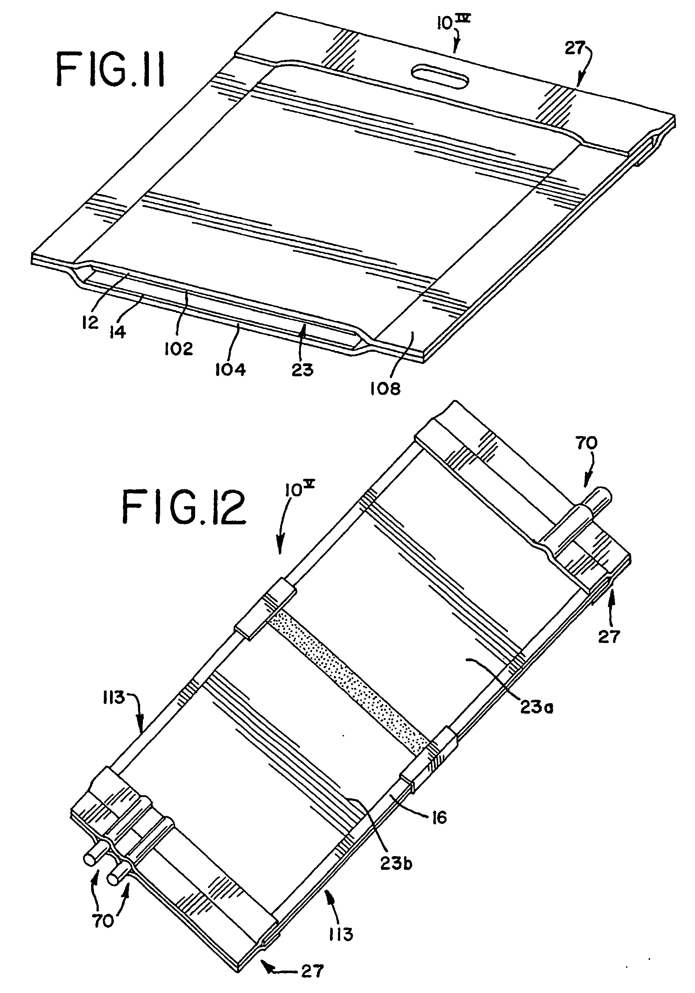

Figure 8 shows an access port 70 in one end of a container 10. The access port 70 may be provided in any of the containers described above to allow access to the contents of the inner chamber 23 from outside the container. It may be desirable to include more than one access port 70 or a plurality of access ports 70 at various locations on the container including at opposite ends of the container 10 as shown in Figure 11. The access port 70 of Figure 8 has a port tube 72 which extends from outside the container to the inner chamber 23 of the container 10. Typically, the port tube 72 is sealed by a membrane (not shown) that prevents contamination of the contained solution from the environment. As shown in Figure 8, the port tube may be incorporated into the tail seal 27 so that the access port 70 will be incorporated into the container 10 upon sealing of the open end of the container with the tail seal 27.

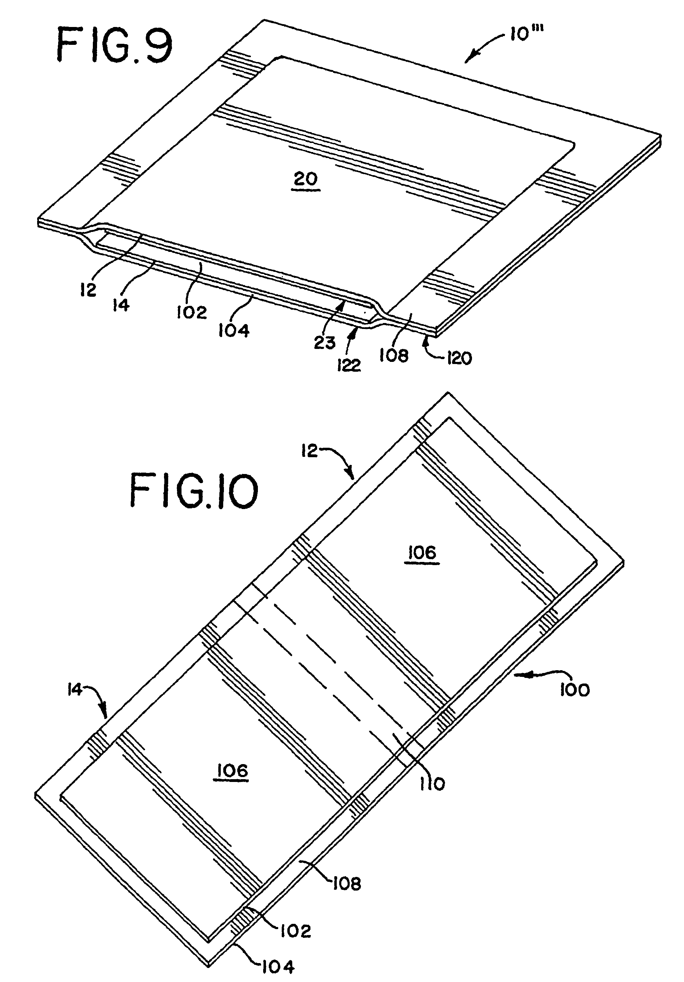

Figure 9 shows a container 10"' fabricated from a multilayered material 100 (Figure 10) having inner and outer layers 102 and 104. The outer layer 104 comprises a first layer and the inner layer 102 comprises a second layer. The inner layer 102 overlaps a portion of the outer layer 104 to define an overlap area 106. A sealing flange 108 extends from the outer layer 104 outside the overlap area 106. Fold lines 110 separates the material 100 into two panels that when folded will form the sidewalls 12 and 14. The container 10'" is fabricated by folding the material 100 along fold lines 110 to bring the sidewalls 12 and 14 into registration and sealing the material 100 along the sealing flange 108 to seal the container 10'". Figure 11 shows container 10^{IV} which is the same in all respects to container 10"' of Figure 9 except one end of the container is sealed by a tail seam 27.

As further shown in Figures 9, 10 and 13-18, before any sealing process is commenced, peripheral edges of the first and second sidewalls 12,14 are brought into registration. As a result, the overlap area 106 (Figure 10) of the first sidewall 12 is substantially centrally disposed over the overlap area 106 of the second sidewall 14 wherein the inner layers 102 of each multilayered material 100 are in confronting relation. The sealing flanges 108 of the first sidewall 12 and the second sidewall 14 are in also confronting relation. In this configuration, the sealing flange 108 of the first sidewall 12 and the sealing flange 108 of the second sidewall 14 define a first layered structure 120 having a first number of layers along the sealing flange 108, i.e., two layers. The overlap area 106 of the first sidewall 12 and the overlap area 106 of the second sidewall 14 define a second layered structure 122 having a second number of layers, i.e., four layers. The second layered structure 122 has a greater number of layers than the first layered structure 120.

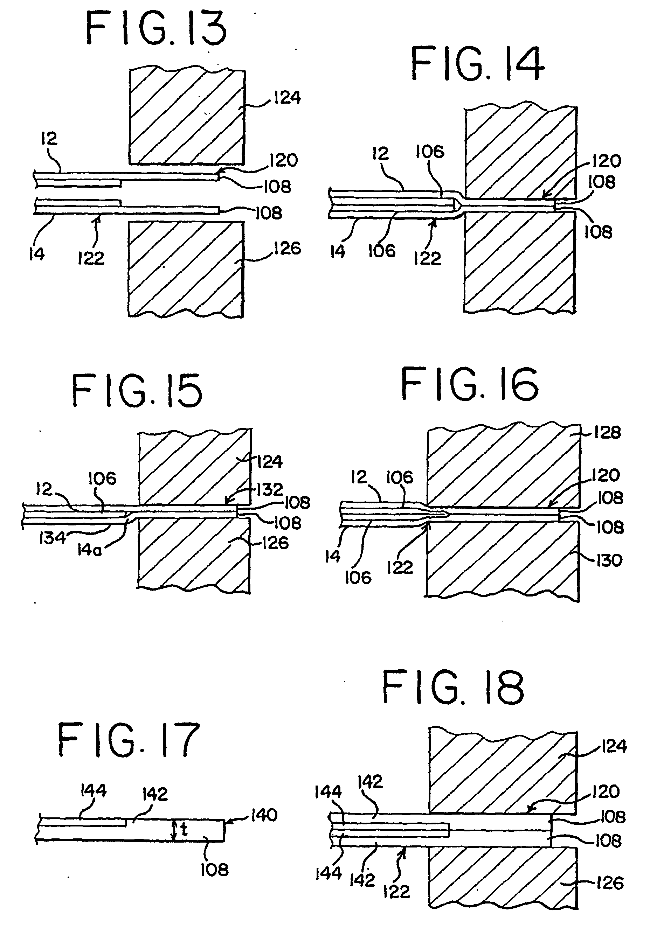

As further shown in Figure 13, the registered sidewalls 12,14 are placed between a pair of sealing dies 124,126. Figure 13 shows the sealing dies 124,126 open. Specifically, the sealing flanges 108 that define the first layered structure 120 are positioned between the dies 124,126. As shown in Figure 14, the sealing dies 124,126 are closed against the first layered structure 120. Sealing energy is then applied to the first layered structure 120 through the dies 124,126 to form a peripheral seam. The sealing energy can be applied through conduction sealing techniques or induction sealing techniques such as ultrasonic and radio frequency energy. Figure 16 shows the first layered structure 120 and a portion of the second layered structure 122 between another pair of sealing dies 128,130 to form a peripheral seam. Thus, it is understood that, if desired, the sealing energy can be applied not only to the sealing flanges 108, or first layered structure 120, but also to the overlap areas 106, or second layered structure 122. It is further understood that the first layered structure 120 and the second layered structure 122 could include greater numbers of layers without departing from the scope of the present invention.

While the sidewalls 12,14 are typically made from multilayered materials 100, as shown in Figure 15, one of the sidewalls may be a single layer. In this configuration, peripheral edges of the first sidewall 12 are brought into registration with a single-layered sidewall 14a having a sealing flange 108. As a result, the overlap area 106 of the first sidewall 12 is substantially centrally disposed over the second sidewall 14a. The sealing flange 108 of the first sidewall 12 is in registration with the sealing flange 108 of the second sidewall 14a. In this configuration, the sealing flange 108 of the first sidewall 12 and the sealing flange 108 of the second sidewall 14a define a first layered structure 132 having a first number of layers along the sealing flange 108, i.e., two layers. The overlap area 106 of the first sidewall 12 and the second sidewall 14a define a second layered structure 134 having a second number of layers, i.e., three layers. The second layered structure 134 has a greater number of layers than the first layered structure 132. As further shown in Figure 15, sealing energy is applied to the first layered structure 132 to form a peripheral seam.

Figures 17 and 18 show another multilayered material 140 of the present invention used to form the first and second sidewalls 12,14. The multilayered material 140 has a first layer 142 and a second layer 144. Although the material 140 has multiple layers, it has a uniform thickness "t" across a width of the web of material. A portion of the first layer 142 that extends outwardly from the second layer 144 comprises the sealing flange 108. As shown in Figure 18, the sidewalls 12,14 comprising the multilayered material 140 are placed between the pair of sealing dies 124,126 wherein the sealing flanges 108 are in registration. This results in the first layered structure 120 and the second layered structure 122. Sealing energy is applied to the first layered structure 120 along the sealing flanges 108 to form a peripheral seam. If desired, sealing energy can also be applied to the second layered structure 122.

Thus, a container is formed having different layered structures. Unlike the '064 patent previously discussed, the container of the present invention is formed wherein, from the start of the process, a first layered structure and a second layered structure are present wherein the second layered structure has a greater number of layers than the first layered structure. These layered structures are formed from the initial positioning of the sidewall materials. The layered structures are not created from the sealing process itself as in the '064 patent. The present invention allows for greater versatility in the available sealing energies that can be used such as both conductive and inductive sealing techniques. The invention is not dependent on certain properties of the sidewall materials such as inner layer responsiveness to radio frequency energy.

It is understood that the skirt 18 previously described could also be used to connect the outer surfaces of the first and second sidewalls 12,14.

The outer layer 104 of the material 100 may be selected from the category of materials set forth above for the sidewalls, and the inner layer 102 may be of the same category of material used to form the frangible seam 60. The inner layer 102 may be coextruded onto the outer layer 104 or deposited thereon using printing techniques such as roller, brush, spray, Gravure printing, screen printing, hot stamping, ink-jet printing, chemical vapor deposition, or electrostatic deposition.

Figure 12 shows a multichambered container 10^{V} having tail seams 27 sealing opposite ends of the container and providing multiple access ports 70 which will allow access to chamber 23a and 23b independently of one another. Container^{v} is shown with its peripheral seal 16 connecting the inner walls 64 and 66 (Figure 7) respectively of sidewalls 12 and 14 (as also described with reference to Figures 9 and 10) to define a tube and closing the open ends of the tube with two tail seams 27. Container^{v} could also be sealed with a skirt 18 (Figure 2) connecting outer surfaces 20 and 22 along lateral edges 113 of the container to define a tube and closing off both ends of the tube with tail seams 27.

The containers of the present invention may be fabricated by positioning the first and second sidewalls 12 and 14 so that the outer peripheries of the respective sidewalls are in registration. This may be accomplished by folding a single sheet of material along a fold line, as shown in Figure 10, or by using two separate sheets of material. The first leg of the skirt 18a is then attached to the first sidewall outer surface 20 along the entire outer periphery followed by attaching the second leg of the skirt 18b to the outer surface 22 of the second side wall along its entire outer periphery to define an inner chamber 22 between the first and second sidewalls 12 and 14.

It is also possible to use this method of sealing a container on only a portion of a container. For example, tail seam 27 may be used to seal an open end of a pouch or two tail seams may be used to seal two open ends of a tube. The pouch is formed by sealing three sides of the first and second side walls 12 and 14 by attaching the first and second sidewall outer surfaces 20 and 22 using a skirt 18 or by attaching their inner surfaces 64 and 66 together. Likewise, a tube may be formed by attaching opposite lateral edges 113 of the sidewalls 12 and 14. Such a pouch or tube may be sealed using the tail seal 27 or tail seals to connect the outer surfaces 20 and 22 of the first and second side walls 12 and 14 proximate the open end or end of the pouch or tube.

The side walls 12 and 14 may be sealed by any conventional means such as using heated die and platen which may be followed by a chill die and platen as is well known in the industry.

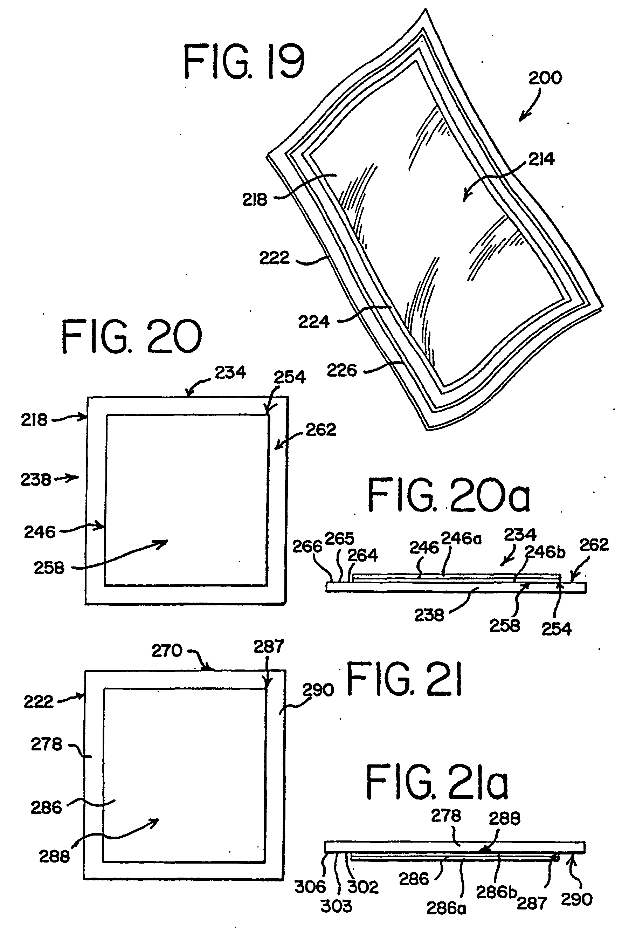

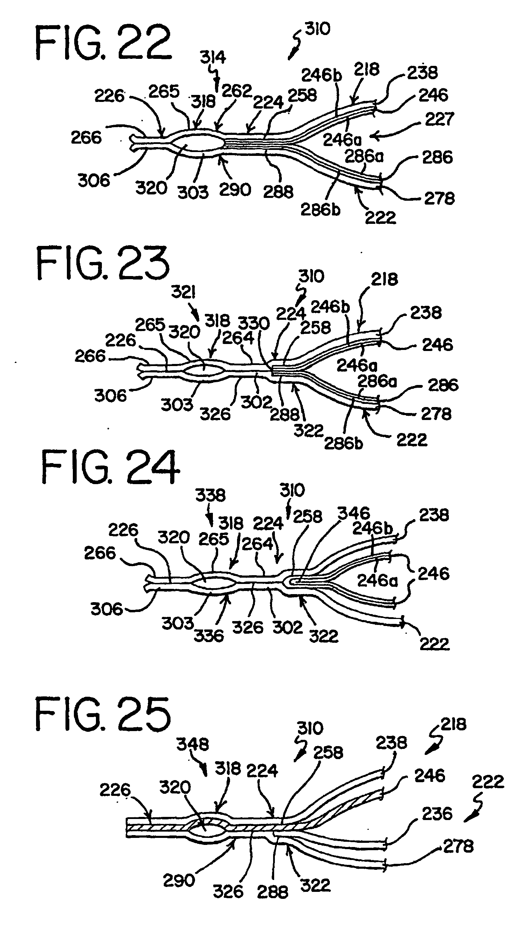

According to another aspect of the invention, and referring to the drawings, FIG. 19 shows another container made in accordance with the present invention generally referred to with the reference numeral 200. The interior workings of the container 200 is sealed from outside elements. Exterior portions 214 of the container 200 are defined by a first wall, or first planar member 218 and an opposing second wall, or second planar member 222 connected together along first and second horizontally spaced seams 224, 226 to form a fluid-tight compartment 227 (See FIG.22). The container 200 shown in FIG. 1 is generally rectangular in shape, but can be formed to other shapes without departing from the invention.

As shown in FIG. 20, in one embodiment of the invention, the first planar member 218 includes a first multilayered material 234. Figure 20a shows the first multilayered material 234 has three plies. The first ply is a first substrate 238 of the first planar member 218 and defines one exterior wall of the container 200. The second and third plies form a first layer 246 of the first planar member 218 and the innermost surface defines one interior wall of the container 200. The first layer 246 itself is a multilayered structure having an inner layer 246a and an intermediate layer 246b. The inner layer 246a defines the inner wall of the container 200 and the intermediate layer 246b is adhered to the first substrate 238. As will be described in greater detail below, the first layer 246 is preferably formed by coextruding the inner layer 246a and the intermediate layer 246b. The first layer 246 is preferably centrally disposed on a portion 254 of the first substrate 238 to define separately a first overlap area 258 and a first peripheral flange 262 extending from the first overlap area 258. In this embodiment, the first peripheral flange 262 circumscribes the first overlap area 258; however, as will be described below, in an alternative embodiment, the first peripheral flange 262 does not surround the first overlap area 258 on all sides. The first layer 246 is heat-welded to the first substrate 238 at opposite peripheral edges of the intermediate layer 246b of the first layer 246. Although not required, the intermediate layer 246b is preferably made from the same material as the first substrate 238.

The first peripheral flange 262 preferably forms the outer perimeter of the first wall 218 and is the portion of the first wall 218 that is used for joining the first wall 218 to the other components of the container 200. As further shown in FIG. 20a, the first peripheral flange 262 further comprises an inner portion 264, an intermediate portion 265 and an outer portion 266. The purposes of the first peripheral flange portions 264,265,266 will become apparent upon further description. It will also be understood that the length of the first peripheral flange 262 can vary depending on the desired seal geometry.

In one embodiment, the second wall, or second planar member 222 comprises a first polymeric material. In this embodiment, the second planar member 222 is a single ply sheet. In the preferred embodiment, the second planar member 222, shown in Figures 21 and 21a, is produced from a second multilayered polymeric material and preferably of the same materials as the first planar member 218. Similar to the first multilayered polymeric material 234, the second multilayered polymeric material 270 comprises a three-ply structure. The first ply is a second substrate 278 which defines an opposing exterior wall of the container 200. The second and third plies form a second layer 286 that defines an opposing interior wall of the container 200. The second layer 286 itself is a multilayered structure having an inner layer 286a and an intermediate layer 286b. The inner layer 286a defines the inner wall of the container 200 and the intermediate layer 286b is adhered to the first substrate 238. As will be described in greater detail below, the second layer 286 is preferably formed by coextruding the inner layer 286a and the intermediate layer 286b. The second layer 286 is preferably centrally disposed on a portion 287 of the second substrate 278 to define separately a second overlap area 288 and a second peripheral flange 290 extending from the second overlap area 288. The second layer 286 is heat-welded to the second substrate 278 at opposite peripheral edges of the intermediate layer 286b of the second layer 286. Although not required, the intermediate layer 286b is preferably made from the same material as the second substrate 278.

Figures 21 and 21 a show the second layer 286 centrally disposed on a portion of the second substrate 278. The second peripheral flange 290 preferably defines an outer perimeter of the second wall 222. Similar to the first peripheral flange 262, the second peripheral flange 290 further comprises an inner portion 302, an intermediate portion 303 and an outer portion 306. The purposes of the second peripheral flange portions 302,303,306 will become apparent upon further description. Similar to the first peripheral flange 262, the second peripheral flange 290 can also vary in length and is usually the same length as the first peripheral flange 262.

Preferably, during the construction of the container 200, the second layer 286 on the second substrate 278 is positioned in registry with the first layer 246 on the first substrate 238 so that when the container 200 is fully formed, the first layer 246 and the second layer 286 define the interior walls of the container 200 and the first substrate 238 and second substrate 278 form the exterior walls of the container 200.

The first planar member 218 and the second planar member 222 are generally produced from a first and second multilayered polymeric material 234, 270 respectively. The polymeric materials employed to construct the first and second multilayered material 234 and 270 may be of any flexible polymeric material including PVC, polyolefins and polyolefin alloys. Suitable polyolefin alloys include those disclosed in commonly-assigned U.S. Patent Serial No. 08/153,823, which is incorporated herein by reference and made a part hereof. For example, it may be desirable to use multiple component polymer alloys, such as a 3-5 component polymer alloys that are RF responsive or RF susceptible. What is meant by RF susceptible is that the material will have a dielectric loss when excited with a signal having a frequency between 1 and 60 MHz, and between the temperature range of 25-250 °C, greater than or equal to 0.05 and more preferably greater than or equal to 0.1.

One three component polymer alloy that is RF responsive, the first component will confer heat resistance and flexibility to the composition. This component may be selected from the group consisting of amorphous polyalpha olefins and preferably is a flexible polyolefin. These polyolefins should resist distortions to high temperatures up to 121 °C, having a peak melting point of greater than 130°C and be highly flexible, having a modulus of not more than 1.38 × 10⁵ KPa (20,000 psi). Such a flexible polyolefins is sold under the product designation Rexene FPO 90007 which has a peak melting point of 145 °C and a modulus of 7.58 × 10⁴ KPa (11,000 psi). In addition, certain polypropylenes with high syndiotacticity also possess the properties of high melting point and low modulus. The first component should constitute from 40-90% by weight of the composition.

The second component of the three component composition is an RF susceptible polymer which confers RF sealability to the composition and may be selected from either of two groups of polar polymers. The first group consists of ethylene copolymers having 50-85% ethylene content with at least one comonomer selected from the group consisting of acrylic acid, methacrylic acid, ester derivatives of acrylic acid with alcohols having 1-10 carbons, ester derivatives of methacrylic acid with alcohols having 1-10 carbons, vinyl acetate, and vinyl alcohol. The RF susceptible polymer may also be selected from a second group consisting of polymers and copolymers containing at least one monomer or segment of urethane, ester, urea, imide, sulfone, and amide. These functionalities may constitute between 5-100% of the RF susceptible polymer. The RF susceptible polymer should constitute by weight from 5-50% of the composition. Preferably, the RF component is copolymers of ethylene methyl acrylate with methyl acrylate within the range of 15-25% by weight of the polymer.

The final component of the three component compound confers compatibility between the first two components, and is selected from a styrene and hydrocarbon block copolymer and more preferably a styrene-ethylene-butene styrene block copolymer (SEBS), styrenic block copolymers and most preferably a SEBS block copolymer that is maleic anhydride functionalized. The third component should constitute by weight within the range of 5-30% of the composition.

In a second three component polymer alloy, the first component confers RF sealability and flexibility over the desired temperature range. The first component confers high temperature resistance ("temperature resistant polymer") and is chosen from the group consisting of polyamides, polyimides, polyurethanes, polypropylene and polymethylpentene. Preferably the first component constitutes by weight within the range of 30-60% of the composition, and preferably is polypropylene. The second component confers RF sealability and flexibility over the desired temperature range. The RF polymer is selected from the first and second groups identified above with the exception of ethylene vinyl alcohol. The second component should constitute by weight within the range of 30-60% of the composition. The third component ensures compatibility between the first two components and is chosen from SEBS block copolymers and preferably is maleic anhydride functionalized. The third component should constitute within the range of 5-30% by weight of the composition.

As for four and five component polymer alloys that are RF responsive, the first component confers heat resistance. This component may be chosen from polyolefins, most preferably polypropylenes, and more specifically the propylene alpha-olefin random copolymers (PPE). Preferably, the PPE's will have a narrow molecular weight range. However, by themselves, the PPE's are too rigid to meet the flexibility requirements. When combined by alloying with certain low modulus polymers, good flexibility can be achieved. Examples of acceptable PPE's include those sold under the product designations Soltex 4208, and Exxon Escorene PD9272.

These low modulus copolymers can include ethylene based copolymers such as ethylene-co-vinyl acetate ("EVA"), ethylene co-alpha olefins, or the so-called ultra low density (typically less than 0.90Kg/L) polyethylenes ("ULDPE"). These ULDPE include those commercially available products sold under the trademarks TAFMER® (Mitsui Petrochemical Co.) under the product designation A485, EXACT® (Exxon Chemical Company) under the product designations 4023-4024, and INSITE® technology polymers (Dow Chemical Co.). In addition, poly butene-l ("PB"), such as those sold by Shell Chemical Company under product designations PB-8010, PB-8310; thermoplastic elastomers based on SEBS block copolymers, (Shell Chemical Company), poly isobutene ("PIB") under the product designations Vistanex L-80, L-100, L-120, L-140 (Exxon Chemical Company), ethylene alkyl acrylate, the methyl acrylate copolymers ("EMA") such as those under the product designation EMAC 2707, and DS-1130 (Chevron), and n-butyl acrylates ("ENBA") (Quantum Chemical) were found to be acceptable copolymers. Ethylene copolymers such as the acrylic and methacrylic acid copolymers and their partially neutralized salts and ionomers, such as PRIMACOR® (Dow Chemical Company) and SURYLN® (E.I. DuPont de Nemours & Company) were also satisfactory.

Preferably the first component is chosen from the group of polypropylene homo and random copolymers with alpha olefins which constitute by weight approximately 30-60%, more preferably 35-45%, and most preferably 45%, of the composition and any combination or subcombination of ranges therein. For example, random copolymers of propylene with ethylene where the ethylene content is in an amount within the range of 1-6%, and more preferably 2-4%, of the weight of the polymer is preferred as the first component.

The second component of the four component polymer alloy confers flexibility and low temperature ductility and is a second polyolefin different than that of the first component wherein it contains no propylene repeating units ("non propylene based polyolefin"). Preferably it is ethylene copolymers including ULDPE, polybutene, butene ethylene copolymers, ethylene vinyl acetate, copolymers with vinyl acetate contents between approximately 18-50%, ethylene methyl acrylate copolymers with methyl acrylate contents being between approximately 20-40%, ethylene n-butyl acrylate copolymers with n-butyl acrylate content of between 20-40%, ethylene acrylic acid copolymers with the acrylic acid content of greater than approximately 15%. An example of these products are sold under such product designations as TAFMER® A-4085 (Mitsui), EMAC DS-1130 (Chevron), Exact 4023, 4024 and 4028 (Exxon). More preferably, the second component is either ULDPE sold by Mitsui Petrochemical Company under the designation TAFMER A-4085, or polybutene-1, PB8010 and PB8310 (Shell Chemical Co.), and should constitute by weight approximately 25-50%, more preferably 35-45%, and most preferably 45%, of the composition and any combination or subcombination of ranges therein.

To impart RF dielectric loss to the four component composition, certain known high dielectric loss ingredients ("RF susceptible polymers") are included in the composition. These polymers may be selected from the group ofRF polymers in the first and second group set forth above.

Other RF active materials include PVC, vinylidine chlorides, and fluorides, copolymer of bis-phenol-A and epichlorohydrines known as FHENOXYS® (Union Carbide). However, significant contents of these chlorine and fluorine containing polymers would render the composition environmentally unsound as incineration of such a material would generate inorganic acids.

The polyamides of the RF susceptible polymer are preferably selected from aliphatic polyamides resulting from the condensation reaction of di-amines having a carbon number within a range of 2-13, aliphatic polyamides resulting from a condensation reaction of di-acids having a carbon number within a range of 2-13, polyamides resulting from the condensation reaction of dimer fatty acids, and amides containing copolymers (random, block, and graft). Polyamides rarely are found in the layer which contacts medical solutions as they typically contaminate the solution by leaching out into the solution. However, it has been found by the Applicants of the present invention that the most preferred RF susceptible polymer are a variety of dimer fatty acid polyamides sold by Henkel Corporation under the product designations MACROMELT and VERSAMID, which do not lead to such contamination. Applicants have also had success with nylon₁₂ sold by Henkel under the name L-20. The RF susceptible polymer preferably should constitute by weight approximately 5-30%, more preferably between 7-13%, and most preferably 10%, of the composition and any combination or subcombination of ranges therein.

The fourth component of the composition confers compatibility among the polar and nonpolar components of the composition (sometimes referred to as a "compatibilizing polymer") and preferably is styrenic block copolymers with hydrocarbon soft segments. More preferably, the fourth component is selected from SEBS block copolymers that are modified by maleic anhydride, epoxy, or carboxylate functionalities, and preferably is an SEBS block copolymer that contains maleic anhydride functional groups ("functionalized"). Such a product is sold by Shell Chemical Company under the designation KRATON® RP-6509. The compatibilizing polymer should constitute by weight approximately 5-40%, more preferably 7-13%, and most preferably 10% of the composition and any combination or subcombination of ranges therein.

It may also desirable to add a fifth component of a nonfunctionalized SEBS block copolymer such as the ones sold by Shell Chemical Company under the product designations KRATON G-1652 and G-1657. The fifth component should constitute by weight approximately 5-40%, and more preferably 7-13% and any combination or subcombination of ranges therein.

The preferred polymer alloy is a blend of styrene-ethylene-butene-styrene ("SEBS") block copolymer (40%-85% by weight), ethylene vinyl acetate ("EVA") (0-40% by weight), and polypropylene (10%-40% by weight). More preferably, the blend is 60% by weight SEBS, 20% by weight EVA and 20% by weight polypropylene. This blend is described in detail in commonly-assigned U.S. Patent No. 4,140,162, which is incorporated in its entirety herein by reference and made a part hereof. A representative blend is sold by Baxter Healthcare under the trademark PL-732®

In a preferred embodiment, and as described in an example below, the first layer 246 comprises a coextruded multilayered material wherein the inner layer 246a is polystyrene and the intermediate layer 246b is PL-732® as described above. The first substrate 238 is also made from FL-732®. Thus, two of the plies of the multilayered material 234 are of the same material, PL-732®. Similarly, the second layer 286 comprises a coextruded multilayered material wherein the inner layer 286a is polystyrene and the intermediate layer 286b is PL-732®. The second substrate 278 is also made from PL-732®. It is contemplated, however, that the first layer 246 and the second layer 286 can each be single plies, or single layers. The single ply first and second layers 246,286 could comprise any number of materials including polystyrene. It is further contemplated that the first substrate 238, first layer 246, second substrate 278 and second layer 286 can all comprise multiple layers themselves. Thus, the present invention contemplates any number of layers wherein there is a different number of layers across the entire multilayered web of material 234,270, and sealed as described below.

FIG. 23a shows one example wherein the first multilayered material 234 comprises two plies. The first substrate 238 is a single-ply and preferably made from PL-732®. The first layer 246 is a single-ply and preferably made from polystyrene. Similarly, the second multi-layered material 270 comprises two plies. The second substrate 278 is a single-ply and preferably made from PL-732®. The second layer 286 is a single-ply and preferably made from polystyrene. The materials 234,270 are then sealed in accordance with the invention as described below.

Preferably, the multilayered polymeric materials allow for strong bonds to form between the first and second substrates 238, 278 and the first and second layers 246, 286. The first and second substrates 238, 278 are produced to a thickness of about 0.102 mm (0.004 inches) to about 0.305 mm (0.012 inches) more preferably 0.127 to about 0.254 mm (0.005 to about 0.010 inches), and most preferably 0.152 mm (0.006 inches) to about 0.203 mm (0.008 inches), or any range or combination of ranges therein. The first and second substrates 238, 278 are generally bonded using conductive, inductive, or other common sealing techniques.

The inner layers 246a,286a of the first and second layers 246, 286, which define the interior of the container 200, are produced from a second polymeric material. This polymeric material is suitable for serving as a cell culture growth surface and preferably has a thickness of 2.54 x 10⁻³ mm (0.0001 inches) to about 0.0254 mm (0.0010 inches), more preferably 5.08 x 10⁻³ mm (0.0002 inches) to about 0.0152 mm (0.0006 inches), and most preferably about 7.62 x 10⁻³ mm (0.0003 inches), or any range or combination of ranges therein. The first and second layers 246, 286 may also be any material that is appropriate for the first and second substrates 238 and 278 respectively. As discussed, in a preferred embodiment, the first and second layers 246,286 each comprise a polystyrene layer (inner layers 246a,286a) coextruded on a PL-732® layer (intermediate layers 246b,286b).

FIG. 22 shows a partial cross-sectional view of a perimeter 310 of the container 200 of one embodiment of the invention. A seal 314 comprises the first seam 224, a spacer seam 318, and the second seam 226. This seal 314 improves the impact resistance of the container 200 by increasing the container's ability to withstand hydraulic shock and consequential rupture of the container side walls 218,222 that can occur upon dropping or otherwise impacting upon a liquid filled container.

In FIG. 22, the first seam 224 is defined by the union of the first overlap area 258 with the second overlap area 288. The spacer seam 318 defines a chamber 320. The chamber 320 is formed by non-sealed portions of the inner and/or intermediate portions 264,265,302,303 of the first and second peripheral flanges 262 and 290. The second seam 226 lies farther toward the outer periphery of the perimeter 310 than the first seam 224. The second seam 26 joins portions of the outer portions 266,306 of the first and second peripheral flanges 262 and 290.

FIG. 23 shows another embodiment of the present invention having a seal 321 in the perimeter 310 of the container 200. The first seam 224 of the seal 321 includes a linking section 322 and a bonding section 326. The length of the linking section 322 in relation to that of the bonding section 326 can be varied greatly. In one embodiment, the length of the linking section 322 is approximately equal to the length of the bonding section 326. Of course the present invention contemplates any ratio of length between the linking section 322 and bonding section 326.

As further shown in FIG. 23, the linking section 322 has a six-ply thickness. Accordingly, the linking section 322 joins the first overlap area 258 of the first wall 218 with the second overlap area 288 of the second wall 222. This union is generally accomplished through the use of heat and/or compression supplied by a mechanical dies as will be described below. Other sealing techniques may also be employed such as applying a bonding agent or tie layer to one or all of the components within the linking section 322 to form a seal.

Moving toward the outer periphery of the perimeter 310 of the container 200, the bonding section 326 is defined by the union of the inner portion 264 of the first peripheral flange 262 with the inner portion 302 of the second peripheral flange 290. At a transition point 330, the linking section 322 and the bonding section 326 cooperate to pinch and seal the first layer 246 with the second layer 286. The seal provided at this transition point 330 is sufficiently strong and durable to withstand internal and external forces which may lead to delamination along this area.

The bonding section 326 has a two-ply thickness. Like the linking section 322, the bonding section 326 may be sealed through the use of heat and/or compression supplied by a mechanical die; however, other means of joining these components may be utilized without departing from the invention.

Moving farther toward the outer periphery of the perimeter 310 of the container 200, the spacer seam 318 separates the bonding section 326 from the outer or second seam 226. Again, the spacer seam 318 defines the chamber 320. Here, the chamber 320 is formed near the center of the spacer seam 318 and is characterized by non-sealed portions of the intermediate portions 265,303 of the first and second peripheral flanges 262,290. The present invention contemplates the elimination of the chamber 320 thereby having a direct link between the bonding section 326 and the second seam 226.

As further shown in FIG. 23, the second seam 226 is positioned adjacent the outer periphery of the perimeter 310 of the container 200. The outer portion 266 of the first peripheral flange 262 and the outer portion 306 of the second peripheral flange 290 are joined to form the second seam 226. In the preferred embodiment, the second seam 226 has a two-ply thickness, and the seal created in the second seam 226 can be formed in a manner similar to other seals created within the seal 321.

FIG. 24 illustrates an alternative seal 338 in cross-section. In this embodiment, the first seam 224 comprises a portion of the first overlap area 258, a continuous portion 346 of the first layer 246, and a portion of the second wall 222. Here, the continuous portion 346 is formed by folding the first layer 246 onto itself. The continuous portion 346 is then sealed in the first seam 224 with a portion of the first overlap area 258 and a portion of the second wall 222.

The seal 338 disclosed in FIG. 24 would be particularly useful in sealing a multilayered polymeric material produced in a tubular form. Such a tubular form is manufactured by coextrusion. The tube can be manufactured through a conventional coextruder die to produce a tube useful in connection with the present invention. The tube can be formed into a container by sealing longitudinally spaced portions of the tube to define a fluid-tight chamber therebetween.

Another embodiment of a seal 348 is disclosed in FIG. 25. In this embodiment, the linking section 322 comprises the first overlap area 258 and the second overlap area 288. Here, the linking section 322 is a four-ply thickness. Further to this embodiment, the bonding section 326, the spacer seam 318, and the second seam 226 comprise three-ply thicknesses. These portions of the seal 348 are formed by joining the first overlap area 258 with the second peripheral flange 290. In this embodiment, the first peripheral flange 262 and the second peripheral flange 290 do not circumscribe the first and second walls 218, 222 respectively. Here, the first and second walls 218, 222 exhibit these flange portions on outer opposing edges. This embodiment, allows continuously extruded multilayered polymeric walls to be joined to form a medical container 10 suitable for cell culture growth.

An advantage of the embodiment disclosed in FIG. 7 is that the need for the stripping process, as described above, is lessened. In this embodiment, rather than stripping a layer around the perimeter of the sheet, only two parallel sides of the sheet must be stripped. One sheet is then rotated 90°, and the container is then assembled using the seal 338. Moreover, stripping can be completely eliminated when a sheet of multilayered material is extruded with the striped second layer present from end-to-end but not side-to-side. One wall can then be rotated 90o, and the container can be assembled using the seal 138.

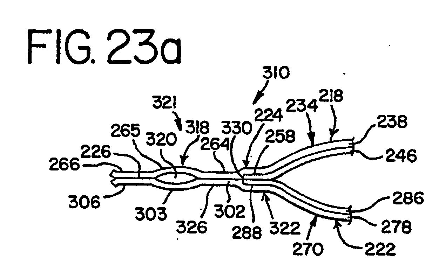

FIGS. 26-29 disclose the method of making the container 200 shown in FIGS. 20-25 wherein a seal having multiple seams is formed along the outer perimeter 310 of a pair of opposed films having multiple layers. The method contemplates the use of a welding apparatus having a welding die. The operation of the die is typical of those found in industry. The die, however, is shaped in a unique configuration to produce the welded seams of the present invention and to achieve substantially equal compression when sealing planar members having various ply thicknesses across their surfaces. The welding die structure will first be described and then the process of making the container 200 will be described.

FIG. 26 shows a welding die 350 of the present invention. The welding die 350 comprises a pair of mating parts 352,354 used in the sealing process. It is of course possible to use a single die without departing from the spirit of the invention. In a preferred embodiment, the welding die 350 comprises a first pair of mating welding dies 356,358 and a second pair of mating welding dies 360,362. The first pair of welding dies 356,358 are each designated "B." The second pair of welding dies 360,362 are each designated "A." In the preferred embodiment, the dies 356,360 of mating part 352 are separated by a spacer bar 364 and the dies 358,362 of the mating part 354 are separated by a spacer bar 366. The dies of each mating part 352,354 could be integrally attached or separated without the use of the spacer bars 364,366 if desired. The break or space between the "B" dies and the "A" dies allows greater manufacturing tolerances for alignment of the dies 356,358,360,362 with the planar members 218,222 that form the container 200 during the sealing process.

The width W1 of the first pair of dies 356,358 is preferably in the range of .10 in. - .40 in. and most preferably the width W1 is 6.35 mm (.25 in.). The width W2 of the second pair of dies 360,362 is preferably in the range of 1.02 mm (.04 in.) - 5.08 mm (20 in.) and most preferably the width W2 is 1.52 mm (.06 in.). The width W3 of the bars 366,364 is preferably in the range of 1.27 mm (.05 in.)- 5.08 mm (.20 in.) and most preferably the width W3 is 1.52 mm (.06 in). Thus, the first pair of dies 356,358 are most preferably spaced from the second pair of dies 360,362 by 1.52 mm (.06 in). The widths W1, W2, W3 may vary depending on the desired construction of the container 200 as will be further described below. Finally, in each welding part 352,354, the die 356,358 designated "B" is vertically offset, or stepped, from the die 360,362 designated "A" by a distance L. The distance L may vary depending on the thickness of the substrates 238,278 and layers 246,286 used in the container 200. This aspect will be further described below.

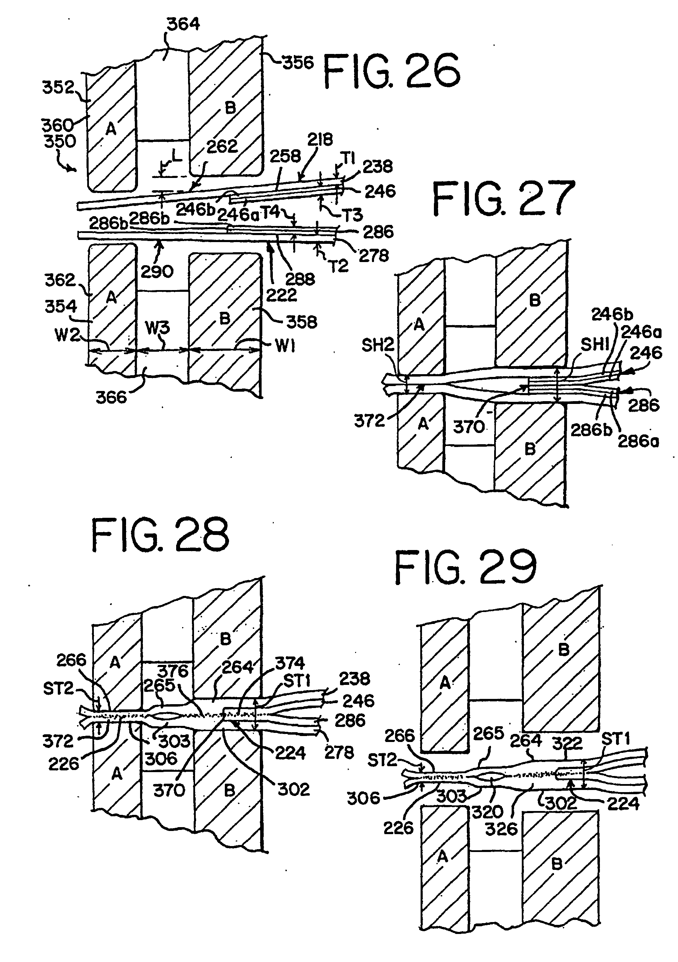

Generally, to make a container 200 having a seal having a dual seam as described above, the first planar member 218 and second planar member 222 are positioned in opposed relation between the welding parts 352,354 of the welding die 350 (FIGS. 27 and 28). The overlap areas 258,288 of the planar members 218,222 preferably extend approximately half the width W1 of the first pair of dies 356,358 and the flanges extend from the first pair of dies 356,358 through the second pair of dies 360,362 (FIGS. 27 and 28). The welding parts 352,354 close and sealing energies are applied through the parts 352,354 (FIG. 28). The first pair of dies 356,358 form the first seam 224 and the second pair of dies form the second seam 226. The dies are then opened and a container 200 is formed having a seal with dual seams (FIG. 29).

Specifically, before commencing the process of the present invention, certain parameters must first be determined to configure the welding die 350 appropriately to form the container 200 based on the materials used for the planar members 218,222. First, as shown in FIG. 26, the thicknesses of the substrates 238,278 and layers 246,286 of the planar members 218,222 are determined. The thickness of the first substrate 238 is designated as T1 and the thickness of the second substrate 278 is designated as T2. The thickness of the first layer 246 is designated as T3. The thickness T3 includes the respective thicknesses of the inner layer 246a and the intermediate layer 246b. The thickness of the second layer 286 is designated as T4. The thickness T4 includes the respective thicknesses of the inner layer 286a and the intermediate layer 286b. The thicknesses T1,T2 of the substrates 238,278 and thicknesses T3,T4 of the layers 246,286 determine the stack height (SH) of the combined plies between the dies in an uncompressed state (FIG. 27). Thus, as shown in FIG. 27, the stack height SH1 in the first pair of dies 356,358 comprises the thickness T1 of the first substrate 238, the thickness T3 of the first layer 246, the thickness T2 of the second substrate 278 and the thickness T4 of the second layer 286 (i.e. SH1 = T1 + T2 + T3 +T4). The stack height SH2 in the second pair of dies 360,362 comprises the thickness T1 of the first substrate 238 and the thickness T2 of the second substrate 278 (i.e. SH2 = T1 + T2). It is understood that all of the thicknesses T1-T4 could vary. In a preferred embodiment, the thicknesses T1,T2 of the substrates 238,278 are equal and the thicknesses T3,T4 of the layers 246,286 are equal. A compression ratio is also selected. The compression ratio is the ratio between the initial stack height SH and a desired seam thickness ST (See FIG. 29) (CR = SH/ST). Typically, a compression ratio is initially selected so that other variables can then be calculated. A typical compression ratio may be 60%. After a compression ratio is selected, desired seam thicknesses can be calculated and the offset length L of the welding die 350 can be set accordingly.

Having the initial parameters set, the process can be commenced. First, as shown in FIG. 26, first planar member 238 and second planar member 278 are positioned in opposed relation. The first layer 246 confronts the second layer 286 to define a first interface area 370 wherein the inner layer 246a of the first layer 246 faces the inner layer 286a of the second layer 286. The first peripheral flange 262 of the first substrate 238 confronts the second peripheral flange 290 of the second substrate 278 to define a second interface area 372. The opposed planar members are placed between the welding parts 352,354 of the welding die 350 (FIG. 26). FIG. 27 shows the planar members 238,278 positioned between the welding parts 352,354 that are partially closed but wherein the planar members 238,278 are in an uncompressed state. In the preferred embodiment, the first interface area 370 is located between the first pair of dies 356,358, and the second interface area 372 is located between the second pair of dies 360,362. As further shown in FIG. 27, the first and second layers 246,286 extend approximately half the width W1 of the first pair of dies 356,358. The first and second peripheral flanges 262,290 extend from the first pair of dies 356,358 past the spacer bars 364,366 and through the second pair of dies 360,362. Specifically, as shown in FIG. 28, the inner portions 264,302 of the first and second peripheral flanges 262,290 are located proximately between the first pair of dies 356,358; the intermediate portions 265,303 of the flanges 262,290 are located proximately between the spacer bars 364,366; and the outer portions 266,306 of the flanges 262,290 are located proximately between the second pair of dies 360,362.

As shown in FIG. 28, the welding die 350 is then activated wherein the first pair of dies 356,358 and the second pair of dies 360,362 compress the planar members 218,222 in the interface areas 370,372. Sealing energy is then applied through the dies 356,358,360,362 forming a first welded seam 224 in the first interface area 370 and a second welded seam 226 in the second interface area 372. Specifically, in a first segment 374 of the first interface area 370, the inner layer 246a of the first layer 246 is welded to the inner layer 286a of the second layer 286. In a second segment 376 of the first interface area 370, the inner portion 264 of the first peripheral flange 262 is welded to the inner portion 302 of the second peripheral flange 290. The intermediate portions 265,303 of the peripheral flanges 262,290 are not welded and cooperatively form the chamber 320. In the second interface area 372, the outer portion 268 of the first peripheral flange 262 is welded to the outer portion 306 of the second peripheral flange 290 to form the second welded seam 226.

As previously discussed, the first pair of dies 356,358 accommodate the first overlap area 258 and the second overlap area 288 comprising six layers at the stack height SH1. The second pair of dies 360,362 accommodate the outer portions 268,306 of the peripheral flanges 262,290 comprising two layers at the stack height SH2. If a conventional flat die was used in the process to form both the first welded seam 224 and the second welded seam 226 to a uniform seam thickness, the difference in stack heights could result in too much compression in the first interface area 370 and little or no compression in the second interface area 372. Thus, the dies 356,360 in the welding part 352 are vertically offset and the dies 358,362 are likewise vertically offset in the welding part 354. The dies 356,358,360,362 are vertically offset a distance L (FIG. 26) such that when the dies are activated as shown in FIG. 28, the dies 356,358 form the first welded seam 224 at a first seam thickness ST1 and the dies 360,362 form the second welded seam at a second seam thickness ST2. Because of the vertically offset distance L, the welded seam 224,226 are formed at substantially equal compression ratios. As discussed, the compression ratio is the ratio between the desired seam thickness ST and the initial stack height SH. Accordingly, the compression ratio CR1 (CR1 = ST1/SH1) in the first interface area 370 is substantially equal to the compression ratio CR2 (CR2 = ST2/SH2) in the second interface area 372. The distance L will obviously vary depending on the desired seam thicknesses ST and the initial stack heights SH, or the compression ratio CR selected for the process. The distance L can be expressed by the formula: L = (SH1 *CR - SH2*CR)/2. A typical compression ratio CR may be 60%. After the welded seams 224,226 are complete and the welding parts 352,354 are opened (FIG. 29). The container 200 is then formed and further attachments could also be affixed to the container 200.

In a preferred embodiment, the sealing energy applied through the dies 356,358,360,362 is heat energy. Other types of sealing energies could be applied, however, based on the materials used for the container 200. For example, sealing energies used in radio-frequency sealing, thermal transfer welding, sonic sealing, and laser welding could also be used.

It will be understood that FIGS. 26-29 are partial cross-sectional views and that the seams 224,226 are formed around a substantially full periphery of the container 200 with appropriate breaks to accommodate tube attachments as is well known. It is contemplated, however, that any number of sides of the container 200 can be sealed wherein only a portion of the periphery is sealed as described.

By way of example, and not limitation, an example of the present invention is now described illustrating the manufacture of the container 200. A first layer 246 was prepared by coextruding an inner layer 246a of polystyrene and an intermediate layer 246b of PL-732. The polystyrene layer had a thickness of 7.62 × 10⁻³ mm (.0003 in.), and the PL-732 had a thickness of 0.203 mm (.008). A first substrate 238 was provided and made from PL-732 having a thickness of 0.254 mm (.010 in). The first layer 246 was welded to a central portion of the first substrate 238. Similarly, a second layer 286 was prepared by coextruding an inner layer 286a of polystyrene and an intermediate layer 286b of PL-732. The polystyrene layer had a thickness of 7.62 × 10⁻³ mm (.0003 in.), and the PL-732 had a thickness of 0.203 mm (.008). A second substrate 278 was provided and made from PL-732 having a thickness of 0.254 mm (.010 in.). The second layer 286 was welded to a central portion of the second substrate 278. The layers 246,286 and substrates 238,278 were placed in confronting relation between the welding die 350 wherein the inner layer 246a (polystyrene layer) of the first layer 246 faced the inner layer 286a (polystyrene layer) of the second layer 286. A compression ratio of 60% was selected and distance L set accordingly based on desired seam thicknesses. The welding die 350 was activated and the container 200 was formed. Containers 200 having a size of 180 square centimeters were manufactured and centrifuged with success. Under normal handling, the containers 200 did not rupture. Other containers 200 having sizes from 70 square centimeters to 1000 square centimeters were also successfully manufactured and were capable of containing liquids without rupturing under normal handling.

While the specific embodiments have been illustrated and described, numerous modifications come to mind without significantly departing from the the scope of protection only limited by the scope of the accompanying Claims.

## Claims

1. A container (10) comprising:
a first sidewall (12) having an outermost layer (104) bonded by coextrusion to a second layer (102) the second layer overlapping a portion of the first layer to define an overlap area (106);
a sealing flange (108) defined by a portion of the outermost layer extending beyond the overlap area;
a second sidewall (14) being connected to the first sidewall along the sealing flange to define an inner chamber (23) therebetween;
the second sidewall and the sealing flange defining a first layered structure (120) having a first number of layers along the sealing flange;
the overlap area and the second sidewall defining a second layered structure (122) having a second number of layers, the second number of layers being greater than the first number of layers; and,
wherein the container is sealed by positioning peripheral edges of the first and second sidewalls into registration so that the overlap area is substantially centrally disposed over the second sidewall and applying sealing energy to the first number of layers to define a peripheral seam (16).

2. The container of Claim 1 further comprising
a frangible seam (60) at an intermediate portion of the first (12) and second (14) sidewalls to divide the inner chamber (23) into two compartments (23a, 23b).

3. The container according to claim 1, wherein said second layer (102) is selected from the group consisting of polystyrene, and ethylene vinyl alcohol.

4. The container according to Claim 2, wherein the frangible seam (60) is capable of being broken by mechanical stress while the peripheral seam (16) is not broken.

5. The container according to claim 1, further comprising:
an access port (70) extending through the peripheral seam (16) from outside the chamber (23) to inside the chamber to define a fluid pathway.

6. The container according to claim 1, further comprising:
a skirt (18) connecting an outer side (20) of the first sidewall (12) to an outer side (22) of the second sidewall (14) to encapsulate the peripheral seam (16).

7. The container according to claim 6, further comprising:
an access port (70) extending through the skirt (18) and peripheral seam (16) from outside the chamber (23) to inside the chamber to define a fluid pathway.

8. The container according to Claim 7, wherein the access port (70) has an outer surface sealed to the skirt (18) to form a leakproof attachment of the access port to the container.

9. The container according to Claim 1, wherein the multilayered first sidewall (12) has a uniform thickness.

10. A container according to claim 1, wherein:
the first sidewall (12) has an outer surface (20);
the second sidewall (12) has an outer surface (22);
a skirt (18) connects the outer surface of the first sidewall to the outer surface of the second sidewall along the sealing flange.

11. The container according to Claim 10, wherein the skirt (18) is constructed of a polyolefin.

12. A container according to claim 1, wherein
the second sidewall (14) has an outermost layer (104) and a second layer (102), the second layer overlapping a portion of the outer layer to define the overlap area (106); and the container further comprising:
a second sealing flange (108) defined by a portion of the outermost layer of the second sidewall extending beyond the second overlap area;
wherein
the second sidewall is connected to the first sidewall along the sealing flanges to define the inner chamber (23) therebetween;
the sealing flanges define the first layered structure (120);
the overlap areas define the second layered structure (122), and,
wherein the container is sealed by positioning the sealing flanges of the first and second sidewalls into registration so that the overlap areas are substantially centrally disposed over one another and applying sealing energy to the first number of layers to define the peripheral seam (16).

13. The container according to Claim 12, further comprising:
an access port (70) extending through the peripheral seam (16) from outside the chamber (23) to inside the chamber to define a fluid pathway.

14. The container according to Claim 12, further comprising:
a skirt (18) connecting an outer side (20) of the first sidewall (12) to an outer side (22) of the second sidewall (14) to encapsulate the peripheral seam (16).

15. The container according to Claim 14, further comprising:
an access port (70) extending through the skirt (18) and peripheral seam (16) from outside the chamber (23) to inside the chamber to define a fluid pathway.

16. The container according to Claim 15, wherein the access port (70) has an outer surface sealed to the skirt (18) to form a leakproof attachment of the access port to the container.

17. A container according to claim 1, wherein
the sealing flange (108) has opposed lateral edges; and the container further comprises
a strip material having a width and extending between lateral edges of the sidewalls (12, 14) to define a frangible seam (60), the strip material being a material different than the first and second sidewalls and frangibly attaching the first sidewall to the second sidewall along the frangible seam to define separate compartments (23a, 23b) in the inner chamber (23).

18. The container according to Claim 17 wherein the first (12) and second (14) sidewalls are constructed of a multilayer material including an inner layer of polystyrene material and an outermost layer of polyolefin material.

19. The container of Claim 17 further comprising two short skirts (62) fixedly attaching the first sidewall (12) to the second side wall (14), one of each short skirts located at opposite lateral edges and overlapping the strip material, the short skirts extending along a portion of the lateral edges.

20. A container according to claim 1, wherein
the first sidewall (12) has an outer side (20);
the second sidewall (14) has an outer (22) side, the second sidewall being connected to a portion of the first sidewall sealing flange (108) to define a pouch having an inner chamber (23) therebetween and an open end; the container further comprising
a skirt (18) connecting the outer side of the first side wall to the outer side of the second sidewall to close the pouch end; and
an access port (70) extending through the skirt from outward the chamber to inward of the inner chamber to define a fluid pathway.

21. A method of fabricating a container (10) comprising the steps of:
providing a first sidewall (12) having an outermost layer (104) bonded by coextrusion to a second layer (102), the second layer overlapping a central portion of the first layer to define an overlap area (106);
the first sidewall having a sealing flange (108) defined by the portion of the outermost layer extending beyond the overlap area;
providing a second sidewall (14) having an outer periphery;
positioning the sealing flange of the first side wall in registration with the outer periphery of the second side wall, wherein the sealing flange and second sidewall define a first layered structure (120) having a first number of layers along the sealing flange, and the overlap area and the second sidewall define a second layered structure (122) having a second number of layers, the second number of layers being greater than the first number of layers;
applying sealing energy to the first number of layers to define a sealed chamber (23) between the first and second sidewalls.

## Patentansprüche

1. Behälter (10), der folgendes aufweist:
- eine erste Seitenwand (12), die eine äußerste Schicht (104) hat, die durch Coextrusion mit einer zweiten Schicht (102) verbunden ist, wobei die zweite Schicht einen Abschnitt der ersten Schicht überlappt, um einen Überlappungs-Bereich (106) zu definieren;
- einen Verschlußflansch (108), der durch einen Abschnitt der äußersten Schicht, der sich über den Überlappungs-Bereich hinauserstreckt, definiert ist;
- eine zweite Seitenwand (14), die mit der ersten Seitenwand entlang des Verschlußflansches verbunden ist, um dazwischen eine innexe Kammer (23) zu definieren;
- wobei die zweite Seitenwand und der Verschlußflansch eine erste geschichtete Struktur (120) definieren, die eine erste Anzahl von Schichten entlang des Verschlußflansches hat;
- wobei der Überlappungs-Bereich und die zweite Seitenwand eine zweite geschichtete Struktur (122) definieren, die eine zweite Anzahl von Schichten hat, wobei die zweite Anzahl von Schichten größer ist als die erste Anzahl von Schichten; und
- wobei der Behälter durch paßgenaues Positionieren von Umfangsrändern der ersten und der zweiten Seitenwand, so daß der Überlappungs-Bereich im wesentlichen zentral über der zweiten Seitenwand angeordnet ist, und durch Anwendung von Dicht-Energie auf die erste Anzahl von Schichten, um eine Umfangsnaht (16) zu definieren, abgedichtet wird.

2. Behälter nach Anspruch 1, der weiterhin folgendes aufweist:
eine zerbrechliche Naht (60) an einem dazwischenliegenden Abschnitt der ersten (12) und der zweiten (14) Seitenwand, um die innere Kammer (23) in zwei Teilkammern (23a, 23b) zu trennen.

3. Behälter nach Anspruch 1, wobei die zweite Schicht (102) aus der Gruppe ausgewählt ist, die aus Polystyrol und Ethylenvinylalkohol besteht.

4. Behälter nach Anspruch 2, wobei die zerbrechliche Naht (60) geeignet ist, durch eine mechanische Beanspruchung gebrochen zu werden, während die Umfangsnaht (16) nicht gebrochen wird.

5. Behälter nach Anspruch 1, der weiterhin folgendes aufweist:
einen Zugangsstutzen (70), der sich durch die Umfangsnaht (16) von außerhalb der Kammer (23) nach innerhalb der Kammer erstreckt, um einen Fluiddurchgang zu definieren.

6. Behälter nach Anspruch 1, der weiterhin folgendes aufweist:
eine Einfassung (18), die eine Außenseite (20) der ersten Seitenwand (12) mit einer Außenseite (22) der zweiten Seitenwand (14) verbindet, um die Umfangsnaht (16) einzukapseln.

7. Behälter nach Anspruch 6, der weiterhin folgendes aufweist:
einen Zugangsstutzen (70), der sich durch die Einfassung (18) und die Umfangsnaht (16) von außerhalb der Kammer (23) nach innerhalb der Kammer erstreckt, um einen Fluiddurchgang zu definieren.

8. Behälter nach Anspruch 7, wobei der Zugangsstutzen (70) eine äußere Oberfläche hat, die mit der Einfassung (18) abgedichtet bzw. verschweißt ist, um eine lecksichere Befestigung des Zugangsstutzens an dem Behälter zu bilden.

9. Behälter nach Anspruch 1, wobei die vielschichtige erste Seitenwand (12) eine gleichförmige Dicke hat.

10. Behälter nach Anspruch 1, wobei:
- die erste Seitenwand (12) eine äußere Oberfläche (20) hat;
- die zweite Seitenwand (14) eine äußere Oberfläche (22) hat;
- eine Einfassung (18) die äußere aberfläche der ersten Seitenwand mit der äußeren Oberfläche der zweiten Seitenwand entlang des Verschlußflansches verbindet.

11. Behältet nach Anspruch 10, wobei die Einfassung (18) aus einem Polyolefin gebildet ist.

12. Behälter nach Anspruch 1, wobei
- die zweite Seitenwand (14) eine äußerste Schicht (104) und eine zweite Schicht (102) hat, wobei die zweite Schicht einen Abschnitt der äußeren Schicht überlappt, um den Überlappungs-Bereich (106) zu bilden, wobei der Behälter weiterhin folgendes aufweist:
- einen zweiten VerschluBflansch (108), der von einem Abschnitt der äußersten Schicht der zweiten Seitenwand definiert ist und sich über den zweiten Überlappungs-Bereich hinauserstreckt, wobei
- die zweite Seitenwand mit der ersten Seitenwand entlang der Verschlußflansche verbunden ist, um die innere Kammer (23) dazwischen zu definieren;
- die Verschlußflansche die erste geschichtete Struktur (120) definieren;
- die Überlappungs-Bereiche die zweite geschichtete Struktur (122) definieren; und
- wobei der Behälter durch paßgenaues Positionieren der Verschlußflansche der ersten und der zweiten Seitenwand, so daß die Überlappungs-Bereiche im wesentlichen zentral übereinander angeordnet sind, und durch die Anwendung von Dicht-Energie auf die erste Anzahl von Schichten, um die Umfangsnaht (16) zu definieren, abgedichtet ist.

13. Behälter nach Anspruch 12, der weiterhin folgendes aufweist:
einen Zugangsstutzen (70), der sich durch die Umfangsnaht (16) von außerhalb der Kammer (23) nach innerhalb der Kammer erstreckt, um einen Fluiddurchgang zu definieren.

14. Behälter nach Anspruch 12, der weiterhin folgendes aufweist:
eine Einfassung (18), die eine Außenseite (20) der ersten Seitenwand (12) mit einer Außenseite (22) der zweiten Seitenwand (14) verbindet, um die Umfangsnaht (16) einzukapseln.

15. Behälter nach Anspruch 14, der weiterhin folgendes aufweist:
einen Zugangsstutzen (70), der sich durch die Einfassung (18) und die Umfangsnaht (16) von außerhalb der Kammer (23) nach innerhalb der Kammer erstreckt, um einen Fluiddurchgang zu definieren.

16. Behälter nach Anspruch 15, wobei der Zugangsstutzen (70) eine äußere Oberfläche hat, die gegen die Einfassung (16) abgedichtet bzw. an diese geschweißt ist, um eine lecksichere Befestigung des Zugangsstutzens am Behälter zu bilden.

17. Behälter nach Anspruch 1, wobei der Verschlußflansch (108) gegenüberliegende seitliche Ränder hat und der Behälter weiterhin folgendes aufweist:
- Streifenmaterial, das eine Breite hat und sich zwischen den seitlichen Rändern der Seitenwände (12, 14) erstreckt, um eine zerbrechliche Naht (60) zu definieren, wobei das Streifenmaterial ein Material ist, das unterschiedlich von dem der ersten und der zweiten Seitenwand ist und die erste Seitenwand zerbrechlich an die zweite Seitenwand entlang der zerbrechlichen Naht anfügt, um separate Teilkammern (23a, 23b) in der inneren Kammer (23) zu definieren.

18. Behälter nach Anspruch 17, wobei die erste (12) und die zweite (14) Seitenwand aus einem vielschichtigen Material, das eine innere Schicht aus Polystyrolmaterial und eine äußerste Schicht aus Polyolefinmaterial einschließt, gebildet sind.

19. Behälter nach Anspruch 17, der weiterhin zwei kurze Einfassungen (62) aufweist, die die erste Seitenwand (12) mit der zweiten Seitenwand (14) fest verbinden, wobei jeweils eine der kurzen Einfassungen an gegenüberliegenden seitlichen Rändern plaziert ist und das Streifenmaterial überlappt, wobei die kurzen Einfassungen sich entlang eines Abschnitts der seitlichen Ränder erstrecken.

20. Behälter nach Anspruch 1, wobei
- die erste Seitenwand (12) eine Außenseite (20) hat;
- die zweite Seitenwand (14) eine Außenseite (22) hat, wobei die zweite Seitenwand mit einem Abschnitt des Verschlußflansches (108) der ersten Seitenwand verbunden ist, um einen Beutel zu definieren, der eine dazwischengelegene innere Kammer (23) und ein offenes Ende hat, wobei der Behälter weiterhin folgendes aufweist:
- eine Einfassung (18), die die Außenseite der ersten Seitenwand mit der Außenseite der zweiten Seitenwand verbindet, um das Ende des Beutels zu verschließen; und
- einen Zugangsstutzen (70), der sich durch die Einfassung von außerhalb der Kammer nach innerhalb der inneren Kammer erstreckt, um einen Fluiddurchgang zu definieren.

21. Verfahren zur Herstellung eines Behälters (10), das folgende Schritte aufweist:
- Bereitstellen einer ersten Seitenwand (12), die eine äußerste Schicht (104) hat, die durch Coextrusion mit einer zweiten Schicht (102) verbunden ist, wobei die zweite Schicht einen zentralen Abschnitt der ersten Schicht überlappt, um einen Überlappungs-Bereich (106) zu definieren;
- wobei die erste Seitenwand einen Verschlußflansch (108) hat, der durch den Teil der äußersten Schicht definiert ist, die sich über den Überlappungs-Bereich hinauserstreckt;
- Bereitstellen einer zweiten Seitenwand (14), die einen äußeren Umfang hat;
- paßgenaues Positionieren des "Verschlußflansches der ersten Seitenwand zu dem äußeren Umfang der zweiten Seitenwand, wobei der Verschlußflansch und die zweite Seitenwand eine erste geschichtete Struktur (120) definieren, die eine erste Anzahl von Schichten entlang des Verschlußflansches hat, und der Überlappungs-Bereich und die zweite Seitenwand eine zweite geschichtete Struktur (122) definieren, die eine zweite Anzahl von Schichten hat, wobei die zweite Anzahl von Schichten größer ist als die erste Anzahl von Schichten;
- Anwendung von Dicht-Energie auf die erste Anzahl von Schichten, um eine abgedichtete Kammer (23) zwischen der ersten und der zweiten Seitenwand zu definieren.

## Revendications

1. Récipient (10) comprenant :
une première paroi latérale (12) ayant une couche la plus extérieure (104) liée par coextrusion à une deuxième couche (102), la deuxième couche chevauchant une partie de la première couche pour définir une région de recouvrement (106) ;
une aile de jonction (108) définie par une partie de la couche la plus extérieure s'étendant au-delà de la région de recouvrement ;
une deuxième paroi latérale (14) reliée à la première paroi latérale le long de l'aile de jonction de manière à définir une chambre intérieure (23) entre elles ;
la deuxième paroi latérale et l'aile de jonction définissant une première structure de couches (120) ayant un premier nombre de couches le long de l'aile de jonction ;
la région de recouvrement et la deuxième paroi latérale définissant une deuxième structure de couches (122) ayant un deuxième nombre de couches, le deuxième nombre de couches étant plus grand que le premier nombre de couches ; et
dans lequel le récipient est fermé par positionnement des bords périphériques des première et deuxième parois latérales en concordance de sorte que la région de recouvrement soit disposée sensiblement centralement au-dessus de la deuxième paroi latérale, et application d'une énergie de soudage au premier nombre de couches pour définir un joint périphérique (16).

2. Récipient selon la revendication 1, comprenant en outre :
un joint cassable (60) situé dans une partie intermédiaire des première (12) et deuxième (14) parois latérales pour diviser la chambre intérieure (23) en deux compartiments (23a, 23b).

3. Récipient selon la revendication 1, dans lequel la dite deuxième couche (102) est choisie dans le groupe comprenant le polystyrène et l'éthylène - alcool vinylique.

4. Récipient selon la revendication 2, dans lequel le joint cassable (60) peut être cassé par une contrainte mécanique tandis que le joint périphérique (16) n'est pas cassé.

5. Récipient selon la revendication 1, comprenant en outre :
une tubulure d'accès (70) s'étendant à travers le joint périphérique (16), de l'extérieur de la chambre (23) à l'intérieur de la chambre, pour définir un passage de fluide.

6. Récipient selon la revendication 1, comprenant en outre :
une jupe (18) reliant un côté extérieur (20) de la première paroi latérale (12) à un côté extérieur (22) de la deuxième paroi latérale (14) pour encapsuler le joint périphérique (16).

7. Récipient selon la revendication 6, comprenant en outre :
une tubulure d'accès (70) s'étendant à travers la jupe (18) et le joint périphérique (16), de l'extérieur de la chambre (23) à l'intérieur de la chambre, pour définir un passage de fluide.

8. Récipient selon la revendication 7, dans lequel la tubulure d'accès (70) a une surface extérieure soudée à la jupe (18) pour former une fixation étanche de la tubulure d'accès au récipient.

9. Récipient selon la revendication 1, dans lequel la première paroi latérale multicouche (12) a une épaisseur uniforme.

10. Récipient selon la revendication 1, dans lequel :
la première paroi latérale (12) présente une surface extérieure (20) ;
la deuxième paroi latérale (14) présente une surface extérieure (22) ; et
une jupe (18) relie la surface extérieure de la première paroi latérale à la surface extérieure de la deuxième paroi latérale le long de l'aile de jonction.

11. Récipient selon la revendication 10, dans lequel la jupe (18) est constituée d'une polyoléfine.

12. Récipient selon la revendication 1, dans lequel :
la deuxième paroi latérale (14) comprend une couche la plus extérieure (104) et une deuxième couche (102), la deuxième couche chevauchant une partie de la couche extérieure pour définir la région de recouvrement (106) ; et le récipient comprenant en outre :
une deuxième aile de jonction (108) définie par une partie de la couche la plus extérieure de la deuxième paroi latérale s'étendant au-delà de la deuxième région de recouvrement ;
dans lequel la deuxième paroi latérale est reliée à la première paroi latérale le long des ailes de jonction de manière à définir la chambre intérieure (23) entre elles ;
les ailes de jonctions définissent la première structure de couches (120) ;
les régions de recouvrement définissent la deuxième structure de couches (122) ; et
dans lequel le récipient est scellé par positionnement des ailes de jonction des première et deuxième parois latérales en concordance de sorte que les régions de recouvrement soient disposées sensiblement centralement l'une au-dessus de l'autre, et application d'une énergie de soudage au premier nombre de couches pour définir le joint périphérique (16).

13. Récipient selon la revendication 12, comprenant en outre :
une tubulure d'accès (70) s'étendant à travers le joint périphérique (16), de l'extérieur de la chambre (23) à l'intérieur de la chambre, pour définir un passage de fluide.

14. Récipient selon la revendication 12, comprenant en outre :
une jupe (18) reliant un côté extérieur (20) de la première paroi latérale (12) à un côté extérieur (22) de la deuxième paroi latérale (14) de manière à encapsuler le joint périphérique (16).

15. Récipient selon la revendication 14, comprenant en outre :
une tubulure d'accès (70) s'étendant à travers la jupe (18) et le joint périphérique (16), de l'extérieur de la chambre (23) à l'intérieur de la chambre, pour définir un passage de fluide.

16. Récipient selon la revendication 15, dans lequel la tubulure d'accès (70) présente une surface extérieure soudée à la jupe (18) pour former une fixation étanche de la tubulure d'accès au récipient.

17. Récipient selon la revendication 1, dans lequel :
l'aile de jonction (108) comporte des bords latéraux opposés ; et le récipient comprend en outre :
un matériau en bande ayant une largeur et s'étendant entre les bords latéraux des parois latérales (12, 14) pour définir un joint cassable (60), le matériau en bande étant un matériau différent de celui des première et deuxième parois latérales et reliant de façon cassable la première paroi latérale à la deuxième paroi latérale le long du joint cassable pour définir des compartiments séparés (23a, 23b) dans la chambre intérieure (23).

18. Récipient selon la revendication 17, dans lequel les première (12) et deuxième (14) parois latérales sont construites en un matériau multicouche comprenant une couche intérieure de matière de type polystyrène et une couche la plus extérieure de matière de type polyoléfine.

19. Récipient selon la revendication 17, comprenant en outre deux jupes courtes (62) reliant de façon fixe la première paroi latérale (12) à la deuxième paroi latérale (14), ces jupes courtes étant situées sur des bords latéraux opposés respectifs et chevauchant le matériau en bande, les jupes courtes s'étendant le long d'une partie des bords latéraux.

20. Récipient selon la revendication 1, dans lequel :
la première paroi latérale (12) présente un côté extérieur (20) ;
la deuxième paroi latérale (14) présente un côté extérieur (22), la deuxième paroi latérale étant reliée à une partie de l'aile de jonction de la première paroi latérale (108) de manière à définir entre elles une poche ayant une chambre intérieure (23) et une extrémité ouverte ; le récipient comprenant en outre :
une jupe (18) reliant le côté extérieur de la première paroi latérale au côté extérieur de la deuxième paroi latérale pour fermer l'extrémité de la poche ; et
une tubulure d'accès (70) s'étendant à travers la jupe, de l'extérieur de la chambre à l'intérieur de la chambre intérieure, pour définir un passage de fluide.

21. Procédé de fabrication d'un récipient (10), comprenant les étapes de :
préparation d'une première paroi latérale (12) ayant une couche la plus extérieure (104) liée par coextrusion à une deuxième couche (102), la deuxième couche chevauchant une partie centrale de la première couche pour définir une région de recouvrement (106) ;
la première paroi latérale comportant une aile de jonction (108) définie par la partie de la couche la plus extérieure qui s'étend au-delà de la région de recouvrement ;
préparation d'une deuxième paroi latérale (14) ayant une périphérie extérieure ;
positionnement de l'aile de jonction de la première paroi latérale en concordance avec la périphérie extérieure de la deuxième paroi latérale, de sorte que l'aile de jonction et la deuxième paroi latérale définissent une première structure de couches (120) ayant un premier nombre de couches le long de l'aile de jonction, et la région de recouvrement et la deuxième paroi latérale définissent une deuxième structure de couches (122) ayant un deuxième nombre de couches, le deuxième nombre de couches étant plus grand que le premier nombre de couches ; et
application d'une énergie de soudage au premier nombre de couches pour définir une chambre fermée (23) entre les première et deuxième parois latérales.
